# EUROPEAN PATENT APPLICATION

(11) **EP 4 848 016 A1**
(43) Date of publication of application: **02.12.2026**
(21) Application number: 24920298.7
(22) Date of filing: 24.01.2024
(51) Int. Cl.: G05B 19/4063, B23Q 17/00

(54) **TOOL INFORMATION PRESENTATION SYSTEM, TOOL INFORMATION PRESENTATION DEVICE, AND TOOL INFORMATION PRESENTATION METHOD**

(71) Applicant: Sumitomo Electric Hardmetal Corp., Itami-shi, Hyogo 664-0016 (JP)
(72) Inventor: KOIKE, Yusuke, Itami-shi, Hyogo 664-0016 (JP)
(74) Representative: Boult Wade Tennant LLP
(86) International application number: PCT/JP2024/002039
(87) International publication number: WO 2025/158575

(57) **Abstract**

A tool information presentation system is configured to present information regarding a tool for milling to a user and includes a tool information presentation device and a display device. The tool information presentation device transmits, to the display device, interference state information, regarding a specific tool, indicating an interference state in one rotation of the tool between the tool and a workpiece with respect to a radial depth of cut and an axial depth of cut of the tool. The display device receives the interference state information transmitted from the tool information presentation device and displays the received interference state information.

## Description

### TECHNICAL FIELD

The present disclosure relates to a tool information presentation system, a tool information presentation device, and a tool information presentation method.

### BACKGROUND ART

Conventionally, a device that simulates cutting machining using various information on the shape and the material of a tool, the shape and the material of a workpiece, machining conditions, and the like, has been known (e.g., PATENT LITERATURES 1-4).

### CITATION LIST

### [PATENT LITERATURE]

PATENT LITERATURE 1: Japanese Laid-Open Patent Publication No. 2008-134813
PATENT LITERATURE 2: Japanese Laid-Open Patent Publication No. 2003-019646
PATENT LITERATURE 3: International Publication No. WO2021/024438
PATENT LITERATURE 4: Japanese Laid-Open Patent Publication No. 2013-132733

### SUMMARY OF THE INVENTION

A tool information presentation system according to an aspect of the present disclosure is configured to present information regarding a tool for milling to a user. The tool information presentation system includes: a tool information presentation device; and a display device. The tool information presentation device transmits, to the display device, interference state information, regarding a specific tool, indicating an interference state in one rotation of the tool between the tool and a workpiece with respect to a radial depth of cut and an axial depth of cut of the tool. The display device receives the interference state information transmitted from the tool information presentation device and displays the received interference state information.

### BRIEF DESCRIPTION OF DRAWINGS

[FIG. 1] FIG. 1 shows an example of an overall configuration of a tool information presentation system according to an embodiment.
[FIG. 2] FIG. 2 is a block diagram showing an example of a hardware configuration of a server according to the embodiment.
[FIG. 3] FIG. 3 illustrates shape information of an end mill.
[FIG. 4A] FIG. 4A illustrates a feed per tooth.
[FIG. 4B] FIG. 4B illustrates an axial depth of cut of an end mill.
[FIG. 5] FIG. 5 is a function block diagram showing an example of functions of a server 100 according to the embodiment.
[FIG. 6] FIG. 6 shows an example of a virtual model of a tool.
[FIG. 7] FIG. 7 is a graph showing an example of the relationship between a rotation angle of the tool and a cutting area in one rotation of the tool.
[FIG. 8] FIG. 8 is a contour map (first map) showing an example of the distribution of the maximum value of the cutting area in one rotation of the tool with respect to an axial depth of cut and a radial depth of cut.
[FIG. 9] FIG. 9 is a contour map (second map) showing an example of the distribution of a variation width of the cutting area in one rotation of the tool with respect to the axial depth of cut and the radial depth of cut.
[FIG. 10] FIG. 10 shows an example of a graph (first graph) showing the relationship between the axial depth of cut and the maximum value of the cutting area in a case where the radial depth of cut is at a specific value, and a graph (second graph) showing the relationship between the axial depth of cut and the variation width of the cutting area in a case where the radial depth of cut is at a specific value.
[FIG. 11] FIG. 11 shows an example of a graph (third graph) showing the relationship between the radial depth of cut and the maximum value of the cutting area in a case where the axial depth of cut is at a specific value, and a graph (fourth graph) showing the relationship between the radial depth of cut and the variation width of the cutting area in a case where the axial depth of cut is at a specific value.

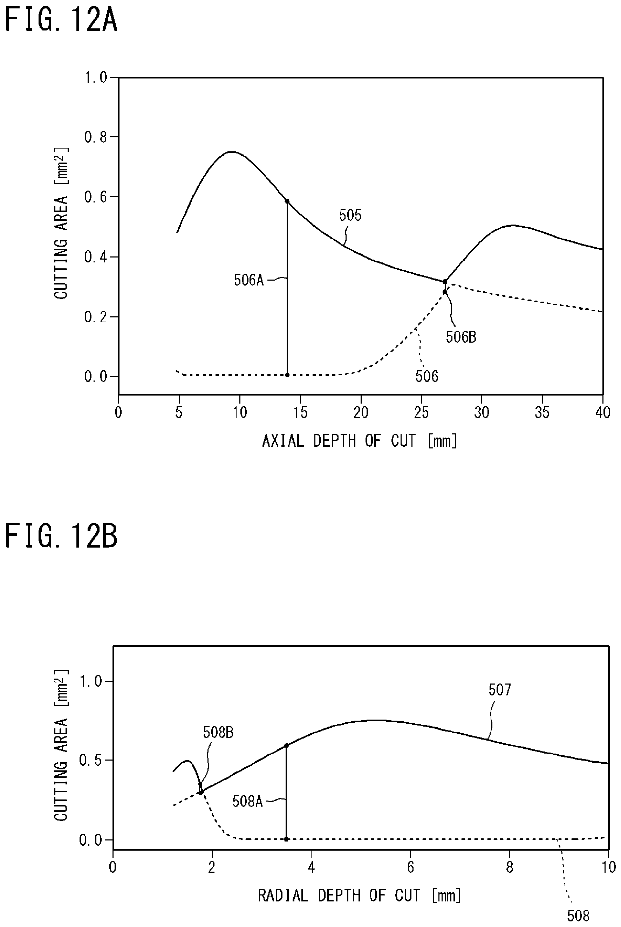

[FIG. 12A] FIG. 12A shows an example of a graph (fifth graph) showing the relationship between the axial depth of cut and the maximum value of the cutting area in a case where the cutting volume of a workpiece in one rotation of the tool is at a specific fixed value, a graph (fifth graph) showing the relationship between the axial depth of cut and the maximum value of the cutting area in a case where the cutting volume of a workpiece in one rotation of the tool is at a specific fixed value, and a graph (sixth graph) showing the relationship between the axial depth of cut and the variation width of the cutting area in a case where the cutting volume of the workpiece in one rotation of the tool is at the above fixed value.
[FIG. 12B] FIG. 12B shows an example of a graph (seventh graph) showing the relationship between the radial depth of cut and the maximum value of the cutting area in a case where the cutting volume of the workpiece in one rotation of the tool is at a specific fixed value, and a graph (eighth graph) showing the relationship between the radial depth of cut and the variation width of the cutting area in a case where the cutting volume of the workpiece in one rotation of the tool is at the above fixed value.
[FIG. 13A] FIG. 13A shows an example of a first map with respect to a first tool.
[FIG. 13B] FIG. 13B shows an example of a first map with respect to a second tool.
[FIG. 13C] FIG. 13C is a contour map (third map) showing an example of the distribution of a first difference between the maximum value of the cutting area caused by the first tool and the maximum value of the cutting area caused by the second tool with respect to the axial depth of cut and the radial depth of cut.
[FIG. 14A] FIG. 14A shows an example of a second map with respect to the first tool.
[FIG. 14B] FIG. 14B shows an example of a second map with respect to the second tool.
[FIG. 14C] FIG. 14C is a contour map (fourth map) showing an example of the distribution of a second difference between the variation width of the cutting area caused by the first tool and the variation width of the cutting area caused by the second tool with respect to the axial depth of cut and the radial depth of cut.
[FIG. 15A] FIG. 15A shows an example of a first graph and a second graph with respect to the first tool.
[FIG. 15B] FIG. 15B shows an example of a first graph and a second graph with respect to the second tool.
[FIG. 15C] FIG. 15C shows an example of a graph (ninth graph) showing the relationship between the axial depth of cut and the first difference obtained by subtracting the maximum value of the cutting area caused by the second tool from the maximum value of the cutting area caused by the first tool, and a graph (tenth graph) showing the relationship between the axial depth of cut and the second difference obtained by subtracting the variation width of the cutting area caused by the second tool from the variation width of the cutting area caused by the first tool.
[FIG. 16A] FIG. 16A shows an example of a third graph and a fourth graph with respect to the first tool.
[FIG. 16B] FIG. 16B shows an example of a third graph and a fourth graph with respect to the second tool.
[FIG. 16C] FIG. 16C shows an example of a graph (eleventh graph) showing the relationship between the radial depth of cut and the first difference obtained by subtracting the maximum value of the cutting area caused by the second tool from the maximum value of the cutting area caused by the first tool, and a graph (twelfth graph) showing the relationship between the radial depth of cut and the second difference obtained by subtracting the variation width of the cutting area caused by the second tool from the variation width of the cutting area caused by the first tool.
[FIG. 17A] FIG. 17A shows an example of a seventh graph and an eighth graph with respect to the first tool.
[FIG. 17B] FIG. 17B shows an example of a seventh graph and an eighth graph with respect to the second tool.
[FIG. 17C] FIG. 17C shows an example of a graph (thirteenth graph) showing the relationship between the radial depth of cut and the first difference obtained by subtracting the maximum value of the cutting area caused by the second tool from the maximum value of the cutting area caused by the first tool, and a graph (fourteenth graph) showing the relationship between the radial depth of cut and the second difference obtained by subtracting the variation width of the cutting area caused by the second tool from the variation width of the cutting area caused by the first tool.
[FIG. 18A] FIG. 18A is a graph showing an example of temporal variation in the cutting area caused by a tool having an unequal pitch.
[FIG. 18B] FIG. 18B is a graph showing a result obtained by performing frequency conversion on the temporal variation in the cutting area in the example in FIG. 18A.
[FIG. 19A] FIG. 19A shows an example of a first map with respect to a tool having an equal pitch and an equal lead.
[FIG. 19B] FIG. 19B shows an example of a second map with respect to a tool having an equal pitch and an equal lead.
[FIG. 19C] FIG. 19C is a contour map (fifth map) showing an example of the distribution of the maximum value at a frequency component higher than 0 Hz in a frequency spectrum of the cutting area caused by a tool having an equal pitch and an equal lead with respect to each of the axial depth of cut and the radial depth of cut.
[FIG. 19D] FIG. 19D is a contour map (sixth map) showing an example of the distribution of the frequency showing the maximum value at a frequency component higher than 0 Hz in a frequency spectrum of the cutting area caused by a tool having an equal pitch and an equal lead, with respect to each of the axial depth of cut and the radial depth of cut.
[FIG. 19E] FIG. 19E is a contour map (seventh map) showing an example of the distribution of the ratio (frequency ratio) of the frequency showing the maximum value at a frequency component higher than 0 Hz in a frequency spectrum of the cutting area caused by a tool A, relative to the cutting frequency of the teeth of the tool having an equal pitch and an equal lead, with respect to each of the axial depth of cut and the radial depth of cut.
[FIG. 20A] FIG. 20A shows an example of a first map with respect to a tool having an unequal pitch and an equal lead.
[FIG. 20B] FIG. 20B shows an example of a second map with respect to a tool having an unequal pitch and an equal lead.
[FIG. 20C] FIG. 20C shows an example of a fifth map with respect to a tool having an unequal pitch and an equal lead.
[FIG. 20D] FIG. 20D shows an example of a sixth map with respect to a tool having an unequal pitch and an equal lead.
[FIG. 20E] FIG. 20E shows an example of a seventh map with respect to a tool having an unequal pitch and an equal lead.
[FIG. 21A] FIG. 21A shows an example of a first map with respect to a tool having an equal pitch and an unequal lead.
[FIG. 21B] FIG. 21B shows an example of a second map with respect to a tool having an equal pitch and an unequal lead.
[FIG. 21C] FIG. 21C shows an example of a fifth map with respect to a tool having an equal pitch and an unequal lead.
[FIG. 21D] FIG. 21D shows an example of a sixth map with respect to a tool having an equal pitch and an unequal lead.
[FIG. 21E] FIG. 21E shows an example of a seventh map with respect to a tool having an equal pitch and an unequal lead.
[FIG. 22A] FIG. 22A is a first half of a flowchart showing an example of a first tool information providing process performed by the server according to the embodiment.
[FIG. 22B] FIG. 22B is a second half of the flowchart showing an example of the first tool information providing process performed by the server according to the embodiment.
[FIG. 23] FIG. 23 is a flowchart showing an example of a second tool information providing process performed by the server according to the embodiment.
[FIG. 24] FIG. 24 is a flowchart showing an example of a third tool information providing process performed by the server according to the embodiment.

### DETAILED DESCRIPTION

### <Problems to be solved by present disclosure>

In milling represented by a milling process, since the tooth of a tool comes into contact with the workpiece at the rotation-axis-direction end surface and the rotation circumferential surface of the rotating tool, the interference state between the tool and the workpiece changes in a complicated manner in accordance with the depth of cut in the rotational radial-direction (hereinafter, also referred to as simply "radial direction") and the depth of cut in the rotational axial-direction (hereinafter, also referred to as simply as "axis direction"). Therefore, unless the interference state between the tool and the workpiece is taken into consideration, selection of a tool suitable for milling and setting of machining conditions in the milling cannot be appropriately performed. However, in conventional devices as described in PATENT LITERATURES 1-4, information regarding the interference state, between the tool and the workpiece, which is one of characteristics of the tool in milling, cannot be presented to a user.

### <Effects of present disclosure>

According to the present disclosure, information regarding the interference state, between the tool and the workpiece, which is a characteristic of the tool in milling, can be presented to the user.

### <Outline of embodiment of the present disclosure>

Hereinafter, the outline of an embodiment of the present disclosure will be listed and described.
(1) A tool information presentation system according to the present embodiment presents information regarding a tool for milling to a user. The tool information presentation system includes: a tool information presentation device and a display device. The tool information presentation device transmits, to the display device, interference state information, regarding a specific tool, indicating an interference state in one rotation of the tool between the tool and a workpiece with respect to a radial depth of cut and an axial depth of cut of the tool. The display device receives the interference state information transmitted from the tool information presentation device and displays the received interference state information. The interference state in one rotation of the tool between the tool and the workpiece is one of characteristics of the tool determined by the shape of the tool such as the diameter of the tool, the number of teeth, the helix angle of the tooth, and the interval (pitch) between adjacent teeth. Therefore, with the above configuration, interference state information regarding the interference state, between the tool and the workpiece, which is a characteristic of the tool, such interference state information being useful for selection of a tool and setting of a machining condition, can be presented to the user.
(2) In (1) above, the interference state information may include a first map showing a distribution of a maximum value of a physical quantity indicating the interference state with respect to each of the radial depth of cut and the axial depth of cut. Accordingly, by referring to the first map, the user can confirm the distribution of the maximum value of the physical quantity with respect to each of the radial depth of cut and the axial depth of cut.
(3) In (1) or (2) above, the interference state information may include a second map showing a distribution of a variation width of a physical quantity indicating the interference state with respect to each of the radial depth of cut and the axial depth of cut. Accordingly, by referring to the second map, the user can confirm the distribution of the variation width of the physical quantity with respect to each of the radial depth of cut and the axial depth of cut.
(4) In any one of (1) to (3) above, the interference state information may include a first graph showing a relationship between the axial depth of cut and a maximum value of a physical quantity indicating the interference state. Accordingly, by referring to the first graph, the user can confirm the relationship between the axial depth of cut and the maximum value of the physical quantity.
(5) In any one of (1) to (4) above, the interference state information may include a second graph showing a relationship between the axial depth of cut and a difference obtained by subtracting a variation width of a physical quantity indicating the interference state from a maximum value of the physical quantity. Accordingly, by referring to the second graph, the user can confirm the relationship between the axial depth of cut and the difference (i.e., the minimum value of the physical quantity) obtained by subtracting the variation width of the physical quantity from the maximum value of the physical quantity.
(6) In (5) above, the interference state information may include a figure in which the first graph and the second graph are superimposed on an identical coordinate system having the axial depth of cut as a first coordinate axis and the physical quantity as a second coordinate axis. Accordingly, by referring to the first graph and the second graph displayed in a superimposed manner, the user can confirm the range of the value that the physical quantity can take, with respect to the axial depth of cut.
(7) In any one of (1) to (6) above, the interference state information may include a third graph showing a relationship between the radial depth of cut and a maximum value of a physical quantity indicating the interference state. Accordingly, by referring to the third graph, the user can confirm the relationship between the radial depth of cut and the maximum value of the physical quantity.
(8) In any one of (1) to (7) above, the interference state information may include a fourth graph showing a relationship between the radial depth of cut and a difference obtained by subtracting a variation width of a physical quantity indicating the interference state from a maximum value of the physical quantity. Accordingly, by referring to the fourth graph, the user can confirm the relationship between the radial depth of cut and the difference (i.e., the minimum value of the physical quantity) obtained by subtracting the variation width of the physical quantity from the maximum value of the physical quantity.
(9) In (8) above, the interference state information may include a figure in which the third graph and the fourth graph are superimposed on an identical coordinate system having the radial depth of cut as a first coordinate axis and the physical quantity as a second coordinate axis. Accordingly, by referring to the third graph and the fourth graph displayed in a superimposed manner, the user can confirm the range of the value that the physical quantity can take with respect to the radial depth of cut.
(10) In (1) above, the tool information presentation device may transmit, to the display device, first interference state information including a first map showing a distribution of a maximum value of a physical quantity indicating the interference state with respect to each of the radial depth of cut and the axial depth of cut, and a second map showing a distribution of a variation width of the physical quantity with respect to each of the radial depth of cut and the axial depth of cut. The display device may receive the first interference state information and display an interference state screen including the first map and the second map included in the received first interference state information. The display device may accept an input from the user of a first designated value for the radial depth of cut, and transmit the inputted first designated value to the tool information presentation device. The tool information presentation device may receive the first designated value, and transmit, to the display device, second interference state information including a first graph showing a relationship between the axial depth of cut and a maximum value of the physical quantity in a case where the radial depth of cut is at the first designated value. The display device may receive the second interference state information and display, on the interference state screen, the first graph included in the received second interference state information. Accordingly, by inputting a desired value of the radial depth of cut into the display device as a first designated value, the user can confirm the relationship between the axial depth of cut and the maximum value of the physical quantity, at the first designated value.
(11) In (10) above, the second interference state information may include a second graph showing a relationship between the axial depth of cut and a difference obtained by subtracting the variation width of the physical quantity from the maximum value of the physical quantity in a case where the radial depth of cut is at the first designated value. The display device may display, on the interference state screen, the second graph included in the received second interference state information. Accordingly, by inputting a desired value of the radial depth of cut into the display device as the first designated value, the user can confirm the relationship between the axial depth of cut and the difference obtained by subtracting the variation width from the maximum value of the physical quantity, at the first designated value.
(12) In (11) above, the interference state screen may include a figure in which the first graph and the second graph are superimposed on an identical coordinate system having the axial depth of cut as a first coordinate axis and the physical quantity as a second coordinate axis. Accordingly, by referring to the first graph and the second graph displayed in a superimposed manner, the user can confirm the range of the value that the physical quantity can take with respect to the axial depth of cut in a case where the radial depth of cut is at the first designated value.
(13) In any one of (10) to (12) above, the display device may accept an input from the user of a second designated value for the axial depth of cut, and transmit the inputted second designated value to the tool information presentation device. The tool information presentation device may receive the second designated value, and transmit, to the display device, third interference state information including a third graph showing a relationship between the radial depth of cut and the maximum value of the physical quantity in a case where the axial depth of cut is at the second designated value. The display device may receive the third interference state information and display, on the interference state screen, the third graph included in the received third interference state information. Accordingly, by inputting a desired value of the axial depth of cut into the display device as the second designated value, the user can confirm the relationship between the radial depth of cut and the maximum value of the physical quantity, at the second designated value.
(14) In (13) above, the third interference state information may include a fourth graph showing a relationship between the radial depth of cut and a difference obtained by subtracting the variation width of the physical quantity from the maximum value of the physical quantity in a case where the axial depth of cut is at the second designated value. The display device may display, on the interference state screen, the fourth graph included in the received third interference state information. Accordingly, by inputting a desired value of the axial depth of cut into the display device as the second designated value, the user can confirm the relationship between the radial depth of cut and the difference obtained by subtracting the variation width from the maximum value of the physical quantity, at the second designated value.
(15) In (14) above, the interference state screen may include a figure in which the third graph and the fourth graph are superimposed on an identical coordinate system having the radial depth of cut as a first coordinate axis and the physical quantity as a second coordinate axis. Accordingly, by referring to the third graph and the fourth graph displayed in a superimposed manner, the user can confirm the range of the value that the physical quantity can take with respect to the radial depth of cut in a case where the axial depth of cut is at the second designated value.
(16) In (1) above, the tool information presentation device may transmit, to the display device, first interference state information including a first map showing a distribution of a maximum value of a physical quantity indicating the interference state with respect to each of the radial depth of cut and the axial depth of cut, and a second map showing a distribution of a variation width of the physical quantity with respect to each of the radial depth of cut and the axial depth of cut. The display device may receive the first interference state information and display an interference state screen including the first map and the second map included in the received first interference state information. The display device may accept an input from the user of each of a first designated value for the radial depth of cut and a second designated value for the axial depth of cut, and transmit the inputted first designated value and second designated value to the tool information presentation device. The tool information presentation device may receive the first designated value and the second designated value, and transmit, to the display device, second interference state information including a fifth graph showing a relationship between the axial depth of cut and the maximum value of the physical quantity in a case where a cutting volume of the workpiece in one rotation of the tool is at a fixed value determined by a product of the first designated value and the second designated value. The display device may receive the second interference state information and display, on the interference state screen, the fifth graph included in the received second interference state information. Accordingly, by inputting a desired value of the radial depth of cut into the display device as the first designated value and inputting a desired value of the axial depth of cut into the display device as the second designated value, the user can confirm the relationship between the axial depth of cut and the maximum value of the physical quantity in a case where the cutting volume of the workpiece in one rotation of the tool is fixed to the value determined by the product of the first designated value and the second designated value.
(17) In (16) above, the second interference state information may include a sixth graph showing a relationship between the axial depth of cut and a difference obtained by subtracting the variation width of the physical quantity from the maximum value of the physical quantity in a case where the cutting volume is at the fixed value. The display device may display, on the interference state screen, the sixth graph included in the received second interference state information. Accordingly, by inputting a desired value of the radial depth of cut into the display device as the first designated value and inputting a desired value of the axial depth of cut into the display device as the second designated value, the user can confirm the relationship between the axial depth of cut and the difference obtained by subtracting the variation width from the maximum value of the physical quantity in a case where the cutting volume of the workpiece in one rotation of the tool is fixed to the value determined by the product of the first designated value and the second designated value.
(18) In (1) above, the tool information presentation device may transmit, to the display device, first interference state information including a first map showing a distribution of a maximum value of a physical quantity indicating the interference state with respect to each of the radial depth of cut and the axial depth of cut, and a second map showing a distribution of a variation width of the physical quantity with respect to each of the radial depth of cut and the axial depth of cut. The display device may receive the first interference state information and display an interference state screen including the first map and the second map included in the received first interference state information. The display device may accept an input from the user of each of a first designated value for the radial depth of cut and a second designated value for the axial depth of cut, and transmit the inputted first designated value and second designated value to the tool information presentation device. The tool information presentation device may receive the first designated value and the second designated value, and transmit, to the display device, second interference state information including a seventh graph showing a relationship between the radial depth of cut and the maximum value of the physical quantity in a case where a cutting volume of the workpiece in one rotation of the tool is at a fixed value determined by a product of the first designated value and the second designated value. The display device may receive the second interference state information and display, on the interference state screen, the seventh graph included in the received second interference state information. Accordingly, by inputting a desired value of the radial depth of cut into the display device as the first designated value and inputting a desired value of the axial depth of cut into the display device as the second designated value, the user can confirm the relationship between the radial depth of cut and the maximum value of the physical quantity in a case where the cutting volume of the workpiece in one rotation of the tool is fixed to the value determined by the product of the first designated value and the second designated value.
(19) In (18) above, the second interference state information may include an eighth graph showing a relationship between the radial depth of cut and a difference obtained by subtracting the variation width of the physical quantity from the maximum value of the physical quantity in a case where the cutting volume is at the fixed value. The display device may display, on the interference state screen, the eighth graph included in the received second interference state information. Accordingly, by inputting a desired value of the radial depth of cut into the display device as the first designated value and inputting a desired value of the axial depth of cut into the display device as the second designated value, the user can confirm the relationship between the radial depth of cut and the difference obtained by subtracting the variation width from the maximum value of the physical quantity in a case where the cutting volume of the workpiece in one rotation of the tool is fixed to the value determined by the product of the first designated value and the second designated value.
(20) In any one of (1) to (19) above, the interference state information may include a third map showing a distribution of a difference obtained by subtracting a maximum value of a second physical quantity indicating an interference state between a second tool and the workpiece from a maximum value of a first physical quantity indicating an interference state between a first tool and the workpiece with respect to each of the radial depth of cut and the axial depth of cut. Accordingly, by referring to the third map, the user can compare the interference state with the workpiece, between the first tool and the second tool.
(21) In any one of (1) to (20) above, the interference state information may include a fourth map showing a distribution of a difference obtained by subtracting a variation width of a second physical quantity indicating an interference state between a second tool and the workpiece from a variation width of a first physical quantity indicating an interference state between a first tool and the workpiece with respect to each of the radial depth of cut and the axial depth of cut. Accordingly, by referring to the fourth map, the user can compare the interference state with the workpiece, between the first tool and the second tool.
(22) In any one of (1) to (21) above, the interference state information may include a ninth graph showing a relationship between the axial depth of cut and a difference obtained by subtracting a maximum value of a second physical quantity indicating an interference state between a second tool and the workpiece from a maximum value of a first physical quantity indicating an interference state between a first tool and the workpiece. Accordingly, by referring to the ninth graph, the user can confirm the relationship between the axial depth of cut and the difference obtained by subtracting the maximum value of the second physical quantity from the maximum value of the first physical quantity.
(23) In any one of (1) to (22) above, the interference state information may include a tenth graph showing a relationship between the axial depth of cut and a difference obtained by subtracting a variation width of a second physical quantity indicating an interference state between a second tool and the workpiece from a variation width of a first physical quantity indicating an interference state between a first tool and the workpiece. Accordingly, by referring to the tenth graph, the user can confirm the relationship between the axial depth of cut and the difference obtained by subtracting the variation width of the second physical quantity from the variation width of the first physical quantity.
(24) In any one of (1) to (23) above, the interference state information may include an eleventh graph showing a relationship between the radial depth of cut and a difference obtained by subtracting a maximum value of a second physical quantity indicating an interference state between a second tool and the workpiece from a maximum value of a first physical quantity indicating an interference state between a first tool and the workpiece. Accordingly, by referring to the eleventh graph, the user can confirm the relationship between the radial depth of cut and the difference obtained by subtracting the maximum value of the second physical quantity from the maximum value of the first physical quantity.
(25) In any one of (1) to (24) above, the interference state information may include a twelfth graph showing a relationship between the radial depth of cut and a difference obtained by subtracting a variation width of a second physical quantity indicating an interference state between a second tool and the workpiece from a variation width of a first physical quantity indicating an interference state between a first tool and the workpiece. Accordingly, by referring to the twelfth graph, the user can confirm the relationship between the radial depth of cut and the difference obtained by subtracting the variation width of the second physical quantity from the variation width of the first physical quantity.
(26) In any one of (1) to (25) above, the interference state information may include a fifth map showing a distribution of a maximum value at a frequency component higher than 0 Hz in a frequency spectrum of a physical quantity indicating the interference state that changes over time in association with rotation of the tool, with respect to each of the radial depth of cut and the axial depth of cut. Accordingly, by referring to the fifth map, the user can confirm how the maximum value in the frequency spectrum of the physical quantity showing the interference state is distributed, with respect to each of the radial depth of cut and the axial depth of cut.
(27) In any one of (1) to (26) above, the interference state information may include a sixth map showing a distribution of a frequency showing a maximum value at a frequency component higher than 0 Hz in a frequency spectrum of a physical quantity indicating the interference state that changes over time in association with rotation of the tool, with respect to each of the radial depth of cut and the axial depth of cut. Accordingly, by referring to the sixth map, the user can confirm the manner of the distribution of the frequency showing the maximum value of the physical quantity in the frequency spectrum of the physical quantity indicating the interference state, with respect to each of the radial depth of cut and the axial depth of cut.
(28) In any one of (1) to (27) above, the interference state information may include a seventh map showing a distribution of a ratio of a frequency showing a maximum value at a frequency component higher than 0 Hz in a frequency spectrum of a physical quantity indicating the interference state that changes over time in association with rotation of the tool, relative to a cutting frequency of teeth of the tool, with respect to each of the radial depth of cut and the axial depth of cut. Accordingly, by referring to the seventh map, the user can confirm the manner of distribution of the frequency showing the maximum value of the physical quantity in the frequency spectrum of the physical quantity indicating the interference state, relative to the cutting frequency of the teeth of the tool, with respect to each of the radial depth of cut and the axial depth of cut. Here, "cutting frequency of teeth" is the number of times, in one second, the teeth of the tool repeatedly cut into a workpiece. For example, when all of the four teeth of a tool having a number of teeth of 4 cut into a workpiece, the cutting frequency of teeth is four times the rotation frequency of the tool.
(29) In any one of (1) to (28) above, the interference state information may include a maximum value in one rotation of the tool of a physical quantity indicating the interference state. When at least one of the radial depth of cut and the axial depth of cut satisfies a first setting condition, the tool information presentation device may determine whether or not the maximum value in one rotation of the tool of the physical quantity falls within a first allowable range. The display device may display a first determination result as to whether or not the maximum value of the physical quantity falls within the first allowable range. Accordingly, by referring to the first determination result, the user can confirm, with respect to a specific tool, whether or not the maximum value of the physical quantity indicating the interference state falls within the first allowable range.
(30) In any one of (1) to (29) above, the interference state information may include a variation width in one rotation of the tool of a physical quantity indicating the interference state. When at least one of the radial depth of cut and the axial depth of cut satisfies a second setting condition, the tool information presentation device may determine whether or not the variation width in one rotation of the tool of the physical quantity falls within a second allowable range. The display device may display a second determination result as to whether or not the variation width of the physical quantity falls within the second allowable range. Accordingly, by referring to the second determination result, the user can confirm, with respect to a specific tool, whether or not the variation width of the physical quantity indicating the interference state falls within the second allowable range.
(31) In any one of (1) to (30) above, the tool information presentation device may execute a selection process of selecting one or a plurality of tools from among a plurality of tools, based on the physical quantity. The display device may display information regarding the one or the plurality of tools selected in the selection process. Accordingly, the user can confirm information regarding one or a plurality of tools selected based on the physical quantity.
(32) In (31) above, the selection process may be a process of selecting, from among the plurality of tools, a tool in which a local minimum value, obtained when the radial depth of cut is varied, of a maximum value in one rotation of the tool of the physical quantity with respect to the axial depth of cut becomes minimum. Accordingly, the user can confirm information regarding the tool, among the plurality of tools, in which the local minimum value, obtained when the radial depth of cut is varied, of the maximum value of the physical quantity with respect to the axial depth of cut becomes minimum.
(33) In (31) above, the selection process may be a process of selecting, from among the plurality of tools, a tool in which a local minimum value, obtained when the axial depth of cut is varied, of a maximum value in one rotation of the tool of the physical quantity with respect to the radial depth of cut becomes minimum. Accordingly, the user can confirm information regarding the tool, among the plurality of tools, in which the local minimum value, obtained when the axial depth of cut is varied, of the maximum value of the physical quantity with respect to the radial depth of cut becomes minimum.
(34) In (31) above, the selection process may be a process of selecting, from among the plurality of tools, a tool in which a local minimum value, obtained when the radial depth of cut is varied, of a variation width in one rotation of the tool of the physical quantity with respect to the axial depth of cut becomes minimum. Accordingly, the user can confirm information regarding the tool, among the plurality of tools, in which the local minimum value, obtained when the radial depth of cut is varied, of the variation width of the physical quantity with respect to the axial depth of cut becomes minimum.
(35) In (31) above, the selection process may be a process of selecting, from among the plurality of tools, a tool in which a local minimum value, obtained when the axial depth of cut is varied, of a variation width in one rotation of the tool of the physical quantity with respect to the radial depth of cut becomes minimum. Accordingly, the user can confirm information regarding the tool, among the plurality of tools, in which the local minimum value, obtained when the axial depth of cut is varied, of the variation width of the physical quantity with respect to the radial depth of cut becomes minimum.
(36) A tool information presentation device according to the present embodiment presents information regarding a tool for milling to a user. The tool information presentation device includes an output unit configured to output, for presenting to the user, interference state information, regarding a specific tool, indicating an interference state in one rotation of the tool between the tool and a workpiece with respect to a radial depth of cut and an axial depth of cut of the tool. Accordingly, interference state information regarding the interference state, between the tool and the workpiece, which is a characteristic of the tool, such interference state information being useful for selection of a tool and setting of a machining condition, can be presented to the user.
(37) A tool information presentation method according to the present embodiment is a method for presenting information regarding a tool for milling to a user. The tool information presentation method includes the steps of: transmitting to a display device, by a tool information presentation device, interference state information, regarding a specific tool, indicating an interference state in one rotation of the tool between the tool and a workpiece with respect to a radial depth of cut and an axial depth of cut of the tool; and receiving, by the display device, the interference state information transmitted from the tool information presentation device, and displaying, by the display device, the received interference state information. Accordingly, interference state information regarding the interference state, between the tool and the workpiece, which is a characteristic of the tool, such interference state information being useful for selection of a tool and setting of a machining condition, can be presented to the user.
(38) A tool information presentation method according to the present embodiment is a tool information presentation method for presenting information regarding a tool for milling to a user. The tool information presentation method includes the steps of: receiving, by a display device, interference state information, regarding a specific tool, indicating an interference state in one rotation of the tool between the tool and a workpiece with respect to a radial depth of cut and an axial depth of cut of the tool; and displaying, by the display device, the received interference state information. Accordingly, interference state information regarding the interference state, between the tool and the workpiece, which is a characteristic of the tool, such interference state information being useful for selection of a tool and setting of a machining condition, can be presented to the user.

The present disclosure can be realized not only as a tool information presentation system having the above characteristic configuration, but also as a computer program that causes a computer to function as the tool information presentation device. In addition, a part or the entirety of the tool information presentation device can be realized as a semiconductor integrated circuit.

### <Details of embodiment of the present disclosure>

Hereinafter, details of an embodiment of the present disclosure will be described with reference to the drawings. At least some parts of the embodiment described below may be combined as desired.

### [1. Configuration of tool information presentation system]

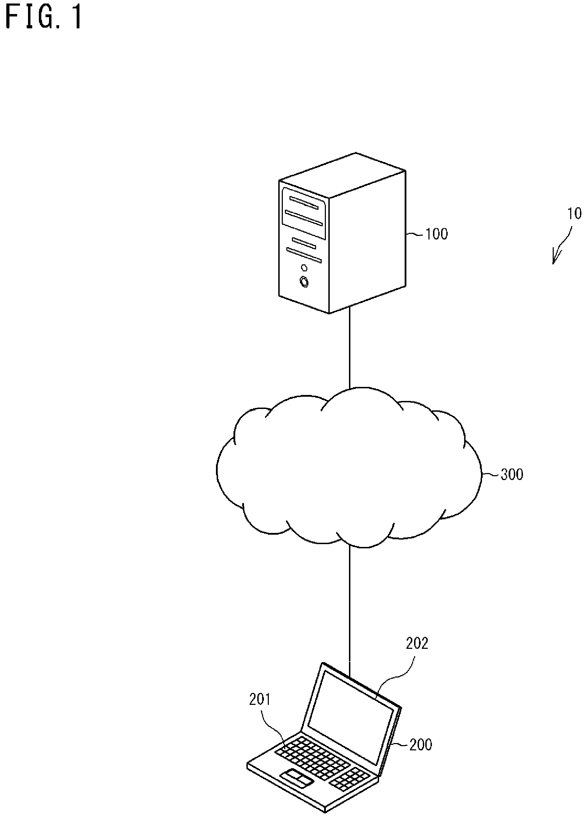

FIG. 1 shows an example of an overall configuration of a tool information presentation system according to the embodiment. A tool information presentation system 10 presents information regarding a tool for milling to a user. An example of the tool for milling is an end mill. Another example of the tool for milling is a face milling cutter or a slotting milling cutter. Hereinafter, an end mill will be described as the tool for milling.

The tool information presentation system 10 includes a server 100 and a terminal device 200. The server 100 is an example of a "tool information presentation device", and the terminal device 200 is an example of a "display device".

The server 100 is connected to a network 300 such as the Internet, an intranet, or a LAN (Local Area Network). The terminal device 200 is also connected to the network 300. The server 100 and the terminal device 200 can communicate with each other via the network 300.

### [2. Hardware configuration of server]

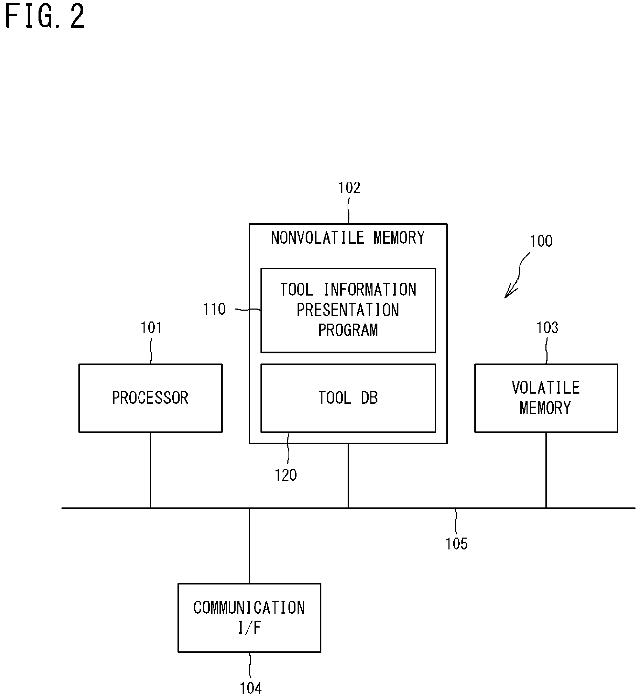

FIG. 2 is a block diagram showing an example of a hardware configuration of the server according to the embodiment.

The server 100 includes a processor 101, a nonvolatile memory 102, a volatile memory 103, and a communication interface (communication I/F) 104. The processor 101, the nonvolatile memory 102, the volatile memory 103, and the communication I/F 104 are connected to each other via a data bus 105.

The volatile memory 103 is a semiconductor memory such as an SRAM (Static Random Access Memory) or a DRAM (Dynamic Random Access Memory), for example. The nonvolatile memory 102 is a flash memory, a ROM (Read Only Memory), or the like, for example. A tool information presentation program 110 as a computer program is stored in the nonvolatile memory 102. Each function of the server 100 is realized by the tool information presentation program 110 being executed by the processor 101. The tool information presentation program 110 can be stored in a storage medium such as a flash memory, a ROM, or a CD?ROM.

The processor 101 is a CPU (Central Processing Unit), for example. However, the processor 101 is not limited to a CPU. The processor 101 may be a GPU (Graphics Processing Unit). The processor 101 may be, for example, an ASIC (Application Specific Integrated Circuit) or may be a programmable logic device such as a gate array or an FPGA (Field Programmable Gate Array). In this case, the ASIC or the programmable logic device is configured to be able to execute the same processes as the tool information presentation program 110.

The communication I/F 104 can communicate with an external device. The communication I/F 104 is connected to the network 300 by a communication cable, for example, and can communicate with the terminal device 200 connected to the network 300. The communication I/F 104 may be a wireless communication interface.

### [3. Tool database]

The nonvolatile memory 102 is provided with a tool database (DB) 120. The tool DB 120 may be provided to a device connected to the network 300 and different from the server 100.

Information on various end mills is stored in the tool DB 120. Specifically, shape information indicating the shape of each end mill is stored in the tool DB 120. The shape information includes a tool diameter, the number of teeth, a helix angle of each tooth, and the pitch of each tooth, for example.

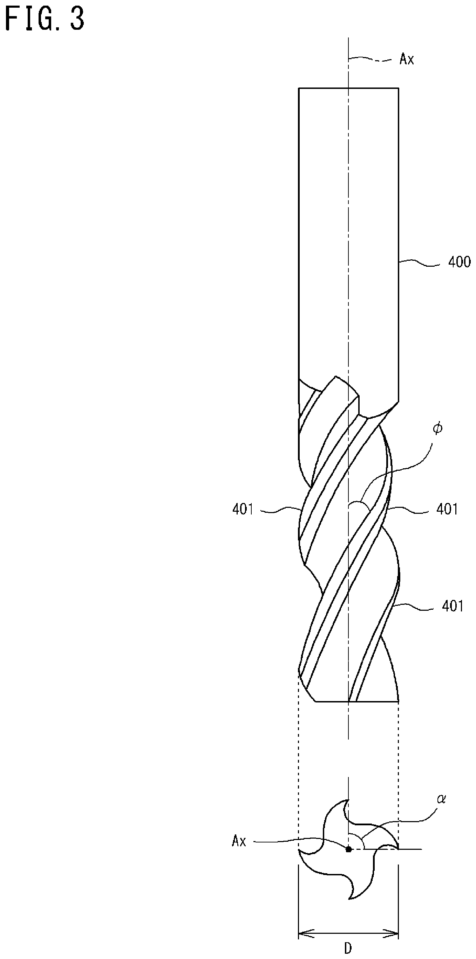

FIG. 3 illustrates shape information of an end mill. The tool diameter is an outer diameter D centered on an axis Ax of an end mill 400. The number of teeth is the number of teeth 401 provided to the end mill. The helix angle is an angle φ of the edge of the tooth 401 with respect to the axis Ax in a side view. The pitch is an angle α between adjacent teeth 401 in the circumferential direction (rotation direction) of the end mill 400 centered on the axis Ax.

In the tool DB 120, the shape information as described above is stored in association with identification information of the end mill 400. The identification information is the product name or the product number of the end mill 400, for example.

### [4. Description of terms]

Hereinafter, terms used in the field of milling will be described.

### [4-1. Feed per tooth]

In milling, an amount of movement (amount of feed) of a tooth in a tool feed direction, after one tooth has passed a point until a next tooth reaches the same angle as this point, is referred to as a feed per tooth.

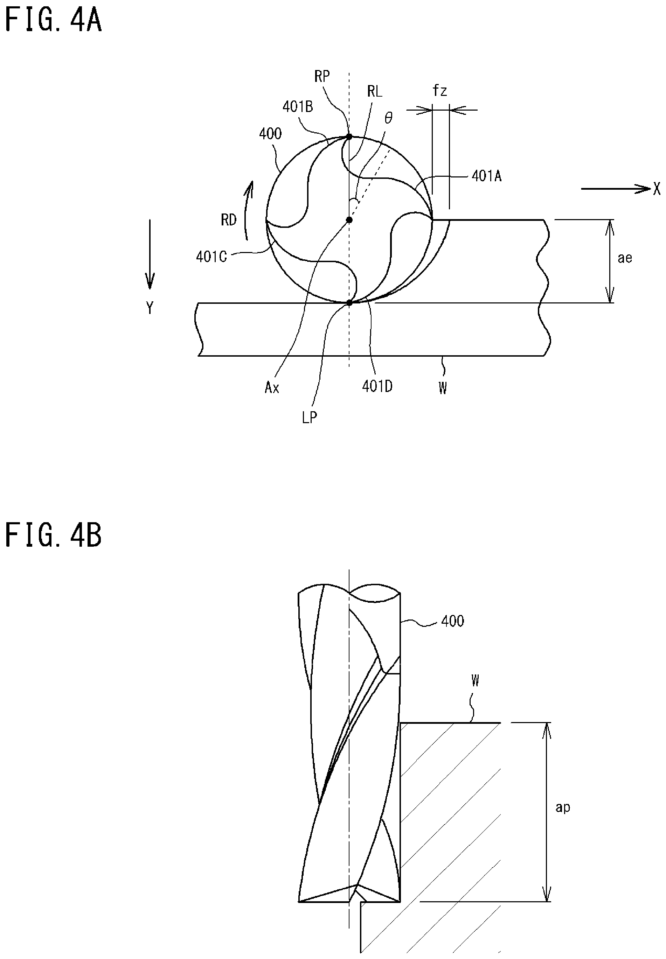

FIG. 4A illustrates a feed per tooth. FIG. 4A shows, as an example, the end mill 400 (hereinafter, also referred to as "tool 400") having a number of teeth of 4. In FIG. 4A, the tool 400 rotates in a clockwise RD direction about a rotation axis Ax. The rotation axis Ax is also the center axis of the tool 400, and the tool 400 rotates about the rotation axis Ax. The tool 400 cuts a workpiece W while advancing in a direction X. A tooth of the tool 400 having come into contact with the workpiece W leaves the workpiece W at an intersection LP between the outer edge circumference of the tool 400 and a straight line (indicated by a broken line in the figure) passing through the rotation axis Ax and orthogonal to the advancing direction X, in a cross section taken by a plane orthogonal to the rotation axis Ax. In the above cross section, a point symmetrical to the point LP with respect to the rotation axis Ax is defined as "reference point RP", and a line segment from the rotation axis Ax to the reference point RP is defined as "reference line RL". Further, in the above cross section, the angle from the reference line RL in the clockwise direction RD about the rotation axis Ax is defined as "tool angle θ". The tool angle formed by the line segment extending from the rotation axis Ax to the reference point RP is 0°. The tool angle θ formed by a line segment extending from the rotation axis Ax in the advancing direction X to the outer edge circumference of the tool 400 is 90°. The tool angle formed by a line segment extending from the rotation axis Ax to the point LP is 180°. The tool 400 comes into contact with the workpiece W only on the advancing direction side, i.e., only in the range of 0°≤θ≤180°.

The amount (distance) by which the tool 400 advances from when a tooth 401A is at the position of a tool angle 90° to when a tooth 401B reaches the position of the tool angle 90° (i.e., the tooth 401A is at the position of a tool angle 180°) is the feed per tooth of the tool 400.

### [4-2. Depth of cut]

With reference to FIG. 4A, a radial depth of cut of the end mill will be described. In FIG. 4A, X is the feed direction of the workpiece W and fz is the feed per tooth of the tool 400.

The depth of cut of the tool corresponding to the distance between a work surface and a finished surface is also referred to as a depth of cut. The axial depth of cut of the tool is also referred to as an axial depth of cut, and the radial depth of cut of the tool is also referred to as a radial depth of cut. The axial depth of cut of the tool is also referred to as an axial depth of cut, and the radial depth of cut of the tool is also referred to as a radial depth of cut.

Here, the direction of θ=0° from the rotation axis Ax is defined as a rotational radial direction Y of the tool 400. That is, the rotational radial direction of the tool 400 is defined as a direction perpendicular to the feed direction X of the workpiece W. A radial depth of cut ae is a depth by which the end mill 400 cuts into the workpiece W, in the rotational radial direction Y of the tool 400. A feed per tooth fz is a length defined along the tool feed direction, and the radial depth of cut ae is a length defined along the radial direction Y perpendicular to the feed direction X, and thus, these are not correlated to each other.

FIG. 4B illustrates the axial depth of cut of an end mill. An axial depth of cut ap is a depth by which the tool 400 cuts into the workpiece W, in the longitudinal direction of the axis Ax of the tool 400.

### [4-3. Cutting area, cutting resistance]

The cutting area per rotation of a tool (hereinafter, also referred to simply as "cutting area") is the size of the region in which the tool and the workpiece interfere with each other while the tool rotates once. The cutting area is an example of a physical quantity indicating an interference state between the tool and the workpiece.

The cutting resistance per rotation of the tool (hereinafter, also referred to simply as "cutting resistance") is a deformation resistance to which the tool is subjected when the tool causes plastic deformation in the workpiece to separate the cut chip while the tool rotates once. The cutting resistance is another example of the physical quantity indicating the interference state between the tool and the workpiece.

### [5. Configuration of terminal device]

With reference to FIG. 1, the terminal device 200 includes an input unit 201 and a display unit 202. The terminal device 200 is a computer, for example. In another example, the terminal device 200 may be a mobile information terminal such as a smartphone or a tablet.

For example, the input unit 201 includes a keyboard and a pointing device such as a mouse. The input unit 201 may be a capacitive or pressure-sensitive-type touch pad placed on the screen of the display unit 202. The input unit 201 is used by a user when inputting data.

The display unit 202 includes a liquid crystal panel or an OEL (organic electroluminescence) panel, for example. The display unit 202 can display information of characters or graphics.

The terminal device 200 further includes a processor, a volatile memory, and a nonvolatile memory (not shown), for example. A computer program for causing the processor to realize the function as a terminal device is stored in the nonvolatile memory. The processor executes the above computer program, thereby being able to perform operations described later.

### [6. Function of server]

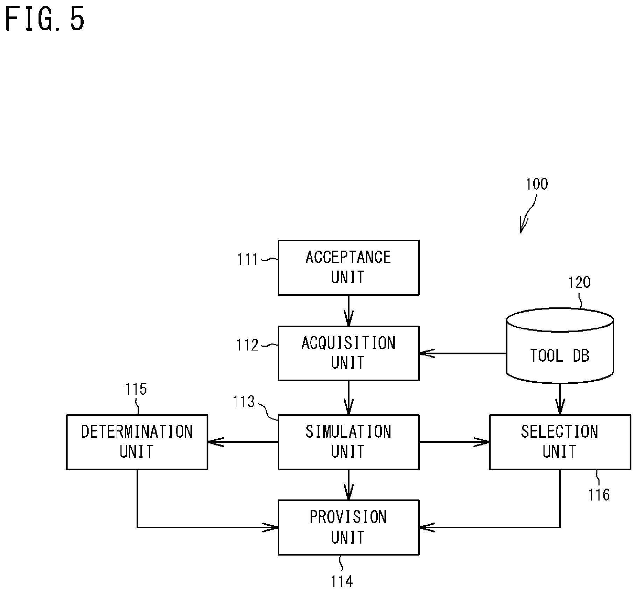

FIG. 5 is a function block diagram showing an example of functions of the server 100 according to the embodiment.

The server 100 has functions of an acceptance unit 111, an acquisition unit 112, a simulation unit 113, a provision unit 114, a determination unit 115, and a selection unit 116. By the processor 101 executing the tool information presentation program 110, the functions of the acceptance unit 111, the acquisition unit 112, the simulation unit 113, the provision unit 114, the determination unit 115, and the selection unit 116 are realized.

When considering use of a specific tool, the user operates the terminal device 200 and requests, from the server 100, tool information (interference state information) regarding the tool. For example, the user inputs identification information of a specific tool (tool for which tool information is to be provided) into the terminal device 200. The terminal device 200 transmits, to the server 100, a tool information request including the inputted identification information.

The acceptance unit 111 accepts the tool information request from the terminal device 200. That is, the acceptance unit 111 receives the tool information request via the network 300 from the terminal device 200.

The acquisition unit 112 acquires shape information of the tool by using the identification information included in the tool information request accepted by the acceptance unit 111. In a specific example, the acquisition unit 112 queries the tool DB 120 for the shape information by using the identification information. The tool DB 120 outputs shape information corresponding to the identification information. The acquisition unit 112 acquires the shape information outputted from the tool DB 120.

The simulation unit 113 executes simulation of cutting machining (milling) using the specific tool, based on the shape information acquired by the acquisition unit 112. The simulation unit 113 varies each of the radial depth of cut and the axial depth of cut, and calculates a cutting area at each radial depth of cut and each axial depth of cut.

In a specific example, the simulation unit 113 creates a virtual model of the tool, based on the acquired shape information, and calculates the cutting area, based on the created virtual model.

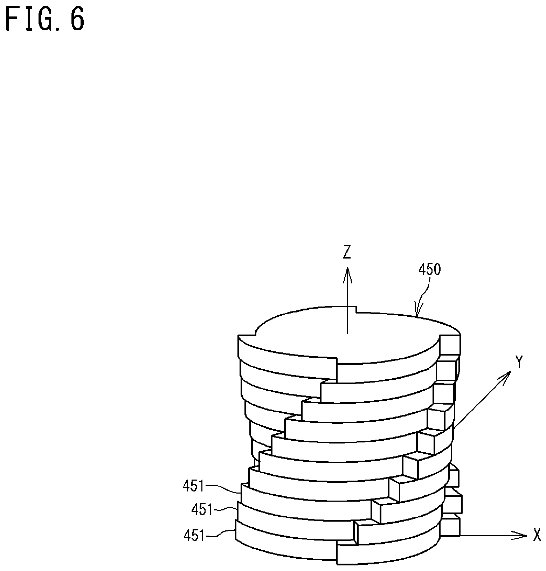

FIG. 6 shows an example of a virtual model of a tool. The simulation unit 113 creates a virtual model 450 representing a three-dimensional shape of a tool in a virtual three-dimensional space XYZ. The virtual model 450 is a three-dimensional model in which, for example, each tooth (cutting tooth) of the tool is divided into a plurality of elements (cutting tooth elements) 451 in the axis direction Z of the tool. By making a width (thickness) dZ in the Z direction of each cutting tooth element 451 minute, the virtual model 450 approximating the actual tool shape can be created.

The simulation unit 113 calculates a cut-off thickness h of the workpiece at each cutting tooth element 451 from the interference state between the cutting tooth element 451 and the workpiece (Formula (1)). Hereinafter, θ represents the rotation angle of the tool, ap represents the axial depth of cut, F represents the cutting resistance, A represents the cutting area, h represents the cut-off thickness, K_{C} represents the specific cutting resistance, Rₜ represents the tool radius, φ represents the helix angle, αᵢ represents the pitch of the i-th tooth, and N represents the number of teeth.
[Math. 1] $h = {f}_{z} sin θ$ (1)

The product of the cut-off thickness h and the width dZ is the cutting area caused by a cutting tooth element 451. The simulation unit 113 calculates the sum of the cutting areas caused by the respective cutting tooth elements 451 obtained by dividing a single cutting tooth (the i-th cutting tooth), thereby calculating a cutting area Aᵢ caused by the i-th cutting tooth (Formulas (2) and (3)). [Math. 2] $\begin{matrix}dA = hdZ = {f}_{z} sin \left(θ-\frac{Z tan φ}{{R}_{t}}\right) dZ \\ {A}_{i} = {\int }_{0}^{ap} {f}_{z} sin \left(θ-\frac{Z tan φ}{{R}_{t}}-{α}_{i}\right) dZ\end{matrix}$

Further, the simulation unit 113 calculates the sum of the cutting areas caused by the respective cutting teeth, thereby calculating a cutting area A caused by a single tool (Formula (4)).
[Math. 3] $A = {\sum }_{i = 1}^{N} {A}_{i}$ (4)

When calculating the cutting resistance of the tool, the simulation unit 113 calculates a cutting resistance Fᵢ at the i-th cutting tooth by the next Formula (5), by using the specific cutting resistance K_{C}.
[Math. 4] ${F}_{i} = {\int }_{0}^{ap} {K}_{c} dA = {\int }_{0}^{ap} {K}_{c} {f}_{z} sin \left(θ-\frac{Z tan φ}{{R}_{t}}-{α}_{i}\right) dZ$ (5)

Further, the simulation unit 113 calculates the sum of the cutting resistances at the respective cutting teeth, thereby calculating a cutting resistance F of a single tool (Formula (6)).
[Math. 5] $F = {\sum }_{i = 1}^{N} {F}_{i}$ (6)

The calculation methods for the cutting area and the cutting resistance described above are examples. The cutting area or the cutting resistance may be calculated by a calculation method different from the above. Hereinafter, a case where the simulation unit 113 calculates the cutting area caused by the tool, as a physical quantity indicating the interference state, will be described.

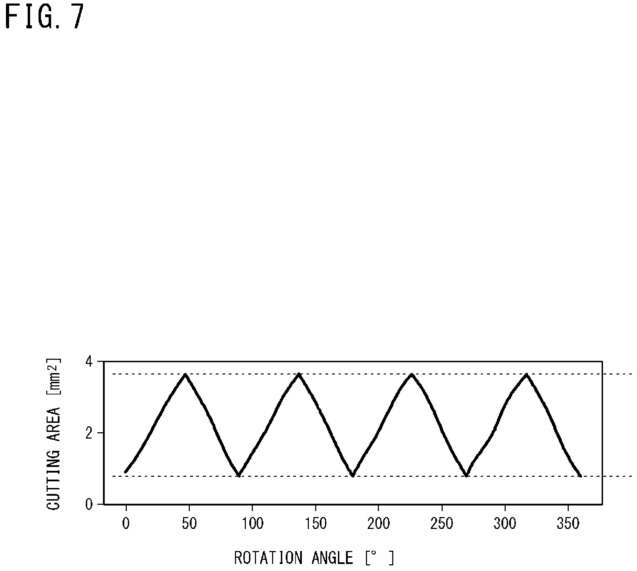

The simulation unit 113 fixes the axial depth of cut ap and the radial depth of cut ae and calculates the cutting area at each rotation angle of the tool when the tool is rotated once. FIG. 7 is a graph showing an example of the relationship between the rotation angle of the tool and the cutting area in one rotation of the tool. In FIG. 7, the vertical axis represents the cutting area, and the horizontal axis represents the rotation angle of a tool. The example shown in FIG. 7 shows variation in the cutting area caused by a tool having a number of teeth of 4. In this example, in one rotation of the tool, peaks of the cutting area appear in the number (i.e., 4) corresponding to the number of teeth.

The simulation unit 113 calculates variation in the cutting area in one rotation of the tool at each of a plurality of axial depth of cuts ap and a plurality of radial depth of cuts ae. Further, the simulation unit 113 calculates the maximum value of the cutting area in one rotation of the tool at each of the plurality of axial depth of cuts ap and the plurality of radial depth of cuts ae.

The simulation unit 113 creates a contour map (hereinafter, also referred to as "first map") showing the distribution of the maximum value of the cutting area in one rotation of the tool with respect to the axial depth of cut ap and the radial depth of cut ae.

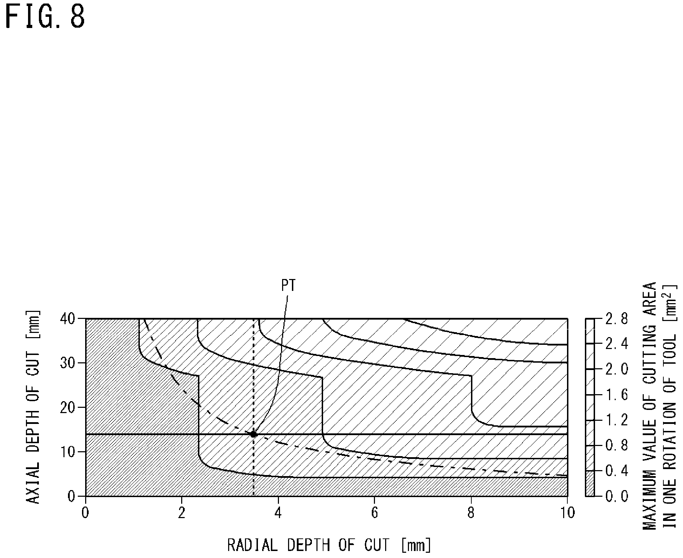

FIG. 8 is a contour map showing an example of the distribution of the maximum value of the cutting area in one rotation of the tool with respect to the axial depth of cut ap and the radial depth of cut ae. In FIG. 8, the vertical axis represents the axial depth of cut ap, and the horizontal axis represents the radial depth of cut ae. In the example in FIG. 8, each hatching corresponds to a color. That is, the first map is colored in accordance with the level of the maximum value of the cutting area. By referring to the first map, the user can confirm, for example, the level of the maximum value of the cutting area at an axial depth of cut and a radial depth of cut that are highly likely to be used. The maximum value of the cutting area influences the life of the tool, breakage of the tool, machining accuracy, and falling-off of the workpiece from a jig. That is, the user can evaluate the life of the tool, breakage of the tool, machining accuracy, and the possibility of falling-off of the workpiece from the jig, based on the maximum value of the cutting area.

The first map shows how the maximum value of the cutting area changes with respect to the axial depth of cut ap and the radial depth of cut ae. For example, based on the first map, in the two-dimensional space represented by the axial depth of cut ap and the radial depth of cut ae, in which region the maximum value of the cutting area is high, and in which region the maximum value of the cutting area is low are grasped. In another example, based on the first map, the level of the maximum value of the cutting area at a specific axial depth of cut ap and a specific radial depth of cut ae is grasped. Thus, the first map is information regarding the interference state, between the tool and the workpiece, which is one of characteristics of the tool.

The simulation unit 113 calculates a variation width of the cutting area in one rotation of the tool at each of a plurality of axial depth of cuts ap and a plurality of radial depth of cuts ae.

The simulation unit 113 creates a contour map (hereinafter, also referred to as "second map") showing the distribution of the variation width of the cutting area in one rotation of the tool with respect to the axial depth of cut ap and the radial depth of cut ae.

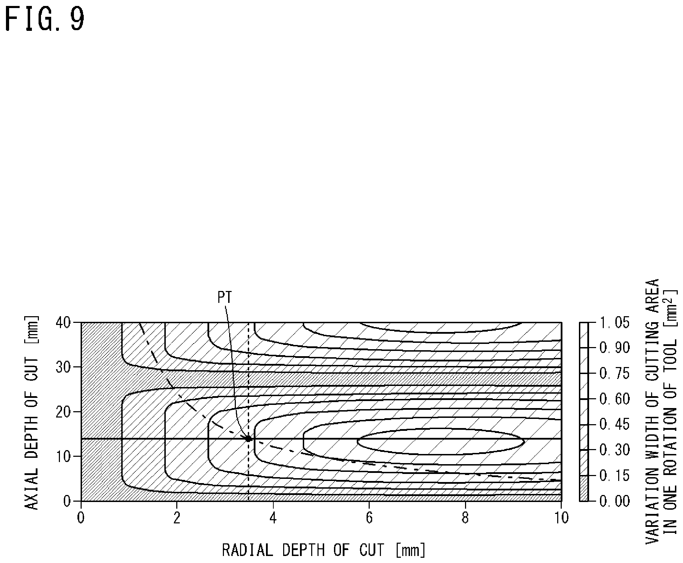

FIG. 9 is a contour map showing an example of the distribution of the variation width of the cutting area in one rotation of the tool with respect to the axial depth of cut ap and the radial depth of cut ae. In FIG. 9, the vertical axis represents the axial depth of cut ap, and the horizontal axis represents the radial depth of cut ae. In the example in FIG. 9, each hatching corresponds to a color. That is, the second map is colored in accordance with the level of the variation width of the cutting area. By referring to the second map, the user can confirm, for example, the level of the variation width of the cutting area at an axial depth of cut and a radial depth of cut that are highly likely to be used. The variation width of the cutting area influences the life of the tool and machining accuracy. That is, the user can evaluate the life of the tool and machining accuracy, based on the variation width of the cutting area.

The second map shows how the variation width of the cutting area changes with respect to the axial depth of cut ap and the radial depth of cut ae. For example, based on the second map, in the two-dimensional space represented by the axial depth of cut ap and the radial depth of cut ae, in which region the variation width of the cutting area is high, and in which region the variation width of the cutting area is low are grasped. In another example, based on the second map, the level of the cutting area at a specific axial depth of cut ap and a specific radial depth of cut ae is grasped. Thus, the second map is information regarding the interference state, between the tool and the workpiece, which is one of characteristics of the tool.

With reference back to FIG. 5, the provision unit 114 provides map information to the user. The map information includes the first map and the second map. However, the map information is not limited thereto, and may include either one of the first map and the second map. In a specific example, the provision unit 114 transmits the map information to the terminal device 200 via the network 300. The terminal device 200 receives the map information and displays the first map and the second map included in the received map information. The map information is an example of first interference state information.

The simulation unit 113 creates a graph (hereinafter, also referred to as "first graph") showing the relationship between the axial depth of cut ap and the maximum value of the cutting area in a case where the radial depth of cut is at a specific value. Further, the simulation unit 113 creates a graph (hereinafter, also referred to as "second graph") showing the relationship between the axial depth of cut ap and the variation width of the cutting area in a case where the radial depth of cut is at a specific value. In a specific example, the second graph is a graph showing the relationship between the axial depth of cut and the difference obtained by subtracting the variation width of the cutting area from the maximum value of the cutting area. In the present embodiment, the simulation unit 113 creates a figure in which the first graph and the second graph are superimposed on an identical coordinate system having the axial depth of cut as the first coordinate axis and the cutting area as the second coordinate axis. The simulation unit 113 may create a figure in which the first graph and the second graph are independent of each other, without superimposing the first graph and the second graph.

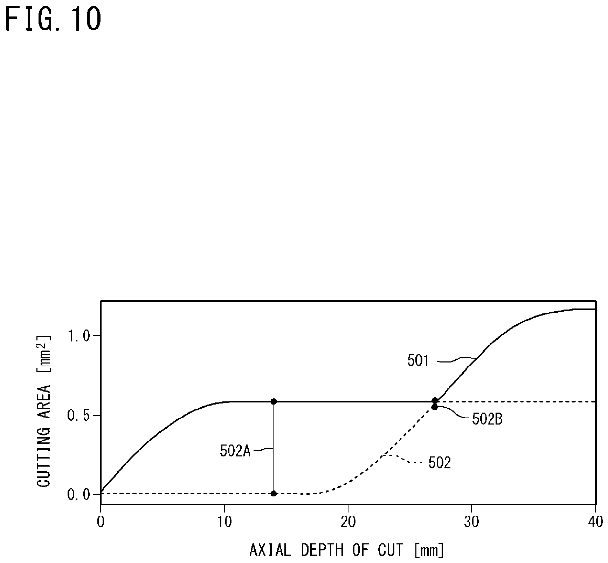

FIG. 10 shows an example of the first graph and the second graph. In FIG. 10, a first graph 501 is indicated by a solid line, and a second graph 502 is indicated by a broken line. In the first graph 501 and the second graph 502 in FIG. 10, the radial depth of cut at a specific point PT shown in FIG. 8 and FIG. 9 is used as the specific value. That is, the first graph 501 corresponds to a cross-sectional view obtained by cutting the first map at the vertical line (broken line) passing through the specific point PT in FIG. 8. The second graph 502 corresponds to a cross-sectional view obtained by cutting the second map at the vertical line (broken line) passing through the specific point PT in FIG. 9.

In the example in FIG. 10, the second graph 502 is a graph of the variation width of the cutting area based on the first graph (the maximum value of the cutting area). That is, at each value of the axial depth of cut, the simulation unit 113 calculates a value obtained by subtracting the variation width of the cutting area from the maximum value of the cutting area, and plots the calculated values on coordinates, thereby creating the second graph 502. The variation width of the cutting area is the difference obtained by subtracting the minimum value of the cutting area from the maximum value of the cutting area. Therefore, the second graph 502 is also a graph of the minimum value of the cutting area.

For example, the simulation unit 113 can add a graphic 502A indicating the variation width of the cutting area at a designated value from the user of the axial depth of cut, to the figure in which the first graph 501 and the second graph 502 are superimposed. The simulation unit 113 can add a graphic 502B indicating the minimum value of the variation width of the cutting area, to the figure in which the first graph 501 and the second graph 502 are superimposed. In the example in FIG. 10, the graphic 502A and the graphic 502B are each a graphic connecting a point on the first graph 501 and a point on the second graph 502 by a line segment. In the graphic 502B in FIG. 10, since the minimum value of the variation width of the cutting area is very small, the two points are so close to each other that the line segment is hardly shown.

With reference back to FIG. 5, for example, the user may designate a specific value for the radial depth of cut (hereinafter, this value will also be referred to as "first designated value"). In a specific example, the user inputs the first designated value for the radial depth of cut into the terminal device 200, by designating a point (the specific point PT) on either one of the first map and the second map. The terminal device 200 transmits the inputted first designated value to the server 100 via the network 300. The acceptance unit 111 of the server 100 receives the first designated value transmitted from the terminal device 200, via the network 300. The simulation unit 113 creates a first graph and a second graph in a case where the radial depth of cut is at the first designated value.

The simulation unit 113 creates a graph (hereinafter, also referred to as "third graph") showing the relationship between the radial depth of cut ae and the maximum value of the cutting area in a case where the axial depth of cut is at a specific value. Further, the simulation unit 113 creates a graph (hereinafter, also referred to as "fourth graph") showing the relationship between the radial depth of cut ae and the variation width of the cutting area in a case where the axial depth of cut is at a specific value. In a specific example, the fourth graph is a graph showing the relationship between the radial depth of cut and the difference obtained by subtracting the variation width of the cutting area from the maximum value of the cutting area. In the present embodiment, the simulation unit 113 creates a figure in which the third graph and the fourth graph are superimposed on an identical coordinate system having the radial depth of cut as the first coordinate axis and the cutting area as the second coordinate axis. The simulation unit 113 may create a figure in which the third graph and the fourth graph are independent of each other, without superimposing the third graph and the fourth graph.

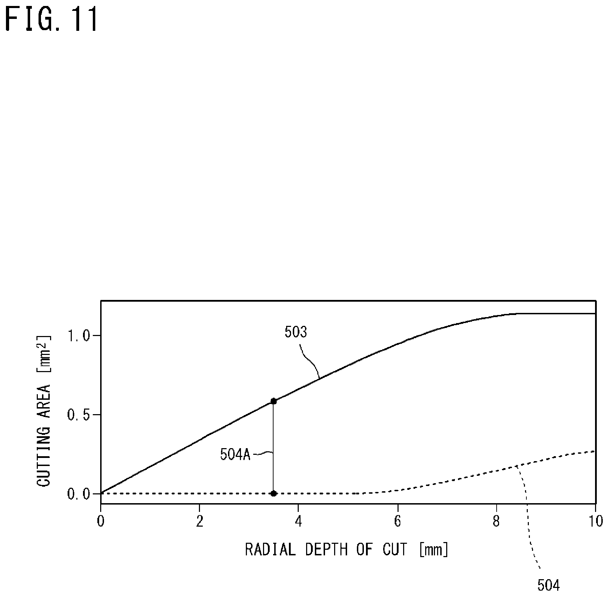

FIG. 11 shows an example of the third graph and the fourth graph. In FIG. 11, a third graph 503 is indicated by a solid line, and a fourth graph 504 is indicated by a broken line. In the third graph 503 and the fourth graph 504 in FIG. 11, the axial depth of cut at the specific point PT shown in FIG. 8 and FIG. 9 is used as the specific value. That is, the third graph 503 corresponds to a cross-sectional view obtained by cutting the first map at the horizontal line (solid line) passing through the specific point PT in FIG. 8. The fourth graph 504 corresponds to a cross-sectional view obtained by cutting the second map at the horizontal line (solid line) passing through the specific point PT in FIG. 9.

In the example in FIG. 11, the fourth graph 504 is a graph of the variation width of the cutting area based on the third graph (the maximum value of the cutting area). That is, at each value of the radial depth of cut, the simulation unit 113 calculates a value obtained by subtracting the variation width of the cutting area from the maximum value of the cutting area, and plots the calculated values on coordinates, thereby creating the fourth graph 504. Therefore, the fourth graph 504 is also a graph of the minimum value of the cutting area.

For example, the simulation unit 113 can add a graphic 504A indicating the variation width of the cutting area at the first designated value, to the figure in which the third graph 503 and the fourth graph 504 are superimposed. In the example in FIG. 11, the graphic 504A is a graphic connecting a point on the third graph 503 and a point on the fourth graph 504 by a line segment.

With reference back to FIG. 5, for example, the user may designate a specific value for the axial depth of cut (hereinafter, this value will also be referred to as "second designated value"). In a specific example, the user inputs the second designated value for the axial depth of cut into the terminal device 200, by designating the specific point PT on either one of the first map and the second map. That is, by designating the specific point PT, the user can simultaneously input a first designated value and a second designated value. The terminal device 200 transmits the inputted second designated value to the server 100 via the network 300. The acceptance unit 111 of the server 100 receives the second designated value transmitted from the terminal device 200, via the network 300. The simulation unit 113 creates a third graph and a fourth graph in a case where the axial depth of cut is at the second designated value.

The provision unit 114 provides graph information to the user. The graph information includes the first graph, the second graph, the third graph, and the fourth graph. However, the graph information is not limited thereto, and may include at least one of the first graph, the second graph, the third graph, and the fourth graph. In a specific example, the provision unit 114 transmits the graph information to the terminal device 200 via the network 300. The terminal device 200 receives the graph information and displays the first graph, the second graph, the third graph, and the fourth graph included in the received graph information. For example, the terminal device 200 displays at least one of a figure in which the first graph and the second graph are displayed in a superimposed manner on an identical coordinate system, and a figure in which the third graph and the fourth graph are displayed in a superimposed manner on an identical coordinate system. The graph information is an example of second interference state information, and is an example of third interference state information.

The simulation unit 113 further creates a graph (hereinafter, also referred to as "fifth graph") showing the relationship between the axial depth of cut ap and the maximum value of the cutting area in a case where the cutting volume of the workpiece in one rotation of the tool is at a specific fixed value (i.e., when the efficiency of cutting machining is constant). The simulation unit 113 further creates a graph (hereinafter, also referred to as "sixth graph") showing the relationship between the axial depth of cut ap and the variation width of the cutting area in a case where the cutting volume of the workpiece in one rotation of the tool is at the above fixed value. In a specific example, the sixth graph is a graph showing the relationship between the axial depth of cut and the difference obtained by subtracting the variation width of the cutting area from the maximum value of the cutting area. In the present embodiment, the simulation unit 113 creates a figure in which the fifth graph and the sixth graph are superimposed on an identical coordinate system having the axial depth of cut as the first coordinate axis and the cutting area as the second coordinate axis. The simulation unit 113 may create a figure in which the fifth graph and the sixth graph are independent of each other, without superimposing the fifth graph and the sixth graph.

FIG. 12A shows an example of the fifth graph and the sixth graph. In FIG. 12A, a fifth graph 505 is indicated by a solid line, and a sixth graph 506 is indicated by a broken line. In the fifth graph 505 and the sixth graph 506 in FIG. 12A, the cutting volume at the specific point PT shown in FIG. 8 and FIG. 9 is used as the specific fixed value. That is, the fifth graph 505 corresponds to a figure observed when a cross section obtained by cutting the first map at the curve (alternate long and short dash line) that passes through the specific point PT in FIG. 8 and in which the product of the axial depth of cut ap and the radial depth of cut ae is constant, is viewed in the horizontal axis direction (i.e., the direction of the axis of the radial depth of cut). The sixth graph 506 corresponds to a figure observed when a cross section obtained by cutting the second map at the curve (alternate long and short dash line) passing through the specific point PT in FIG. 9, is viewed in the horizontal axis direction.

In the example in FIG. 12A, the sixth graph 506 is a graph of the variation width of the cutting area based on the fifth graph (the maximum value of the cutting area). That is, at each value of the radial depth of cut, the simulation unit 113 calculates a value obtained by subtracting the variation width of the cutting area from the maximum value of the cutting area, and plots the calculated values on coordinates, thereby creating the sixth graph 506. Therefore, the sixth graph 506 is also a graph of the minimum value of the cutting area.

For example, the simulation unit 113 can add a graphic 506A indicating the variation width of the cutting area at the second designated value, to the figure in which the fifth graph 505 and the sixth graph 506 are superimposed. The simulation unit 113 can add a graphic 506B indicating the minimum value of the variation width of the cutting area, to the figure in which the fifth graph 505 and the sixth graph 506 are superimposed. In the example in FIG. 12A, the graphic 506A and the graphic 506B are each a graphic connecting a point on the fifth graph 505 and a point on the sixth graph 506 by a line segment. In the graphic 506B in FIG. 10, since the minimum value of the variation width of the cutting area is very small, the two points are close to each other.

With reference back to FIG. 5, for example, the user may designate a fixed value of the cutting volume by designating the specific point PT on either one of the first map and the second map. That is, by designating the specific point PT to simultaneously input a first designated value and a second designated value, the user can designate a cutting volume being the product of the first designated value and the second designated value. The terminal device 200 transmits the inputted first designated value and second designated value to the server 100 via the network 300. The acceptance unit 111 of the server 100 receives the first designated value and the second designated value transmitted from the terminal device 200, via the network 300. The simulation unit 113 creates a fifth graph and a sixth graph in a case where the cutting volume is fixed to the product of the first designated value and the second designated value.

The simulation unit 113 further creates a graph (hereinafter, also referred to as "seventh graph") showing the relationship between the radial depth of cut ae and the maximum value of the cutting area in a case where the cutting volume of the workpiece in one rotation of the tool is at a specific fixed value. The simulation unit 113 further creates a graph (hereinafter, also referred to as "eighth graph") showing the relationship between the radial depth of cut ae and the variation width of the cutting area in a case where the cutting volume of the workpiece in one rotation of the tool is at the above fixed value. In a specific example, the eighth graph is a graph showing the relationship between the radial depth of cut and the difference obtained by subtracting the variation width of the cutting area from the maximum value of the cutting area. In the present embodiment, the simulation unit 113 creates a figure in which the seventh graph and the eighth graph are superimposed on an identical coordinate system having the radial depth of cut as the first coordinate axis and the cutting area as the second coordinate axis. The simulation unit 113 may create a figure in which the seventh graph and the eighth graph are independent of each other, without superimposing the seventh graph and the eighth graph.

FIG. 12B shows an example of the seventh graph and the eighth graph. In FIG. 12B, a fifth graph 507 is indicated by a solid line, and an eighth graph 508 is indicated by a broken line. In the seventh graph 507 and the eighth graph 508 in FIG. 12B, the cutting volume at the specific point PT shown in FIG. 8 and FIG. 9 is used as the specific fixed value. That is, the seventh graph 507 corresponds to a figure observed when a cross section obtained by cutting the first map at the curve (alternate long and short dash line) that passes through the specific point PT in FIG. 8 and in which the product of the axial depth of cut ap and the radial depth of cut ae is constant, is viewed in the vertical axis direction (i.e., the direction of the axis of the axial depth of cut). The eighth graph 508 corresponds to a figure observed when a cross section obtained by cutting the second map at the curve (solid line) passing through the specific point PT in FIG. 9, is viewed in the vertical direction.

In the example in FIG. 12B, the eighth graph 508 is a graph of the variation width of the cutting area based on the seventh graph (the maximum value of the cutting area). That is, at each value of the radial depth of cut, the simulation unit 113 calculates a value obtained by subtracting the variation width of the cutting area from the maximum value of the cutting area, and plots the calculated values on coordinates, thereby creating the eighth graph 508. Therefore, the eighth graph 508 is also a graph of the minimum value of the cutting area.

For example, the simulation unit 113 can add a graphic 508A indicating the variation width of the cutting area at the first designated value, to the figure in which the seventh graph 507 and the eighth graph 508 are superimposed. The simulation unit 113 can add a graphic 508B indicating the minimum value of the variation width of the cutting area, to the figure in which the seventh graph 507 and the eighth graph 508 are superimposed. In the example in FIG. 12B, the graphic 508A and the graphic 508B are each a graphic connecting a point on the seventh graph 507 and a point on the eighth graph 508 by a line segment. In the graphic 508B in FIG. 10, since the minimum value of the variation width of the cutting area is very small, the two points are so close to each other that the line segment is not shown.

The graph information transmitted from the provision unit 114 to the terminal device 200 may include the fifth graph, the sixth graph, the seventh graph, and the eighth graph. For example, the graph information may include at least one of the fifth graph, the sixth graph, the seventh graph, and the eighth graph. In another example, the graph information may include at least one of the fifth graph, the sixth graph, the seventh graph, and the eighth graph, without including the first graph, the second graph, the third graph, and the fourth graph. Accordingly, at least one of the fifth graph, the sixth graph, the seventh graph, and the eighth graph can be presented to the user.

The server 100 can present, to the user, information in which the cutting characteristics of two tools are compared. When considering use of a specific tool, the user operates the terminal device 200 and requests, from the server 100, tool information (interference state information) in which a first tool serving as the specific tool is compared with a second tool serving as a comparison target. For example, the user inputs first identification information of the first tool and second identification information of the second tool into the terminal device 200. The terminal device 200 transmits, to the server 100, a tool information request including the inputted first identification information and second identification information.

The acceptance unit 111 accepts the tool information request from the terminal device 200. The acquisition unit 112 acquires first shape information of the first tool and second shape information of the second tool, by using the first identification information and the second identification information included in the tool information request accepted by the acceptance unit 111. In a specific example, the acquisition unit 112 queries the tool DB 120 for the first shape information by using the first identification information, and queries the tool DB 120 for the second shape information by using the second identification information. The tool DB 120 outputs first shape information corresponding to the first identification information and second shape information corresponding to the second identification information. The acquisition unit 112 acquires the first shape information and the second shape information outputted from the tool DB 120.

The simulation unit 113 executes simulation of milling using the first tool, based on the first shape information acquired by the acquisition unit 112. The simulation unit 113 executes simulation of milling using the second tool, based on the second shape information acquired by the acquisition unit 112. Since the simulation of the milling is the same as the process described above, description thereof is omitted.

With respect to each of a plurality of axial depth of cuts ap and a plurality of radial depth of cuts ae, the simulation unit 113 calculates a difference (hereinafter, also referred to as "first difference") obtained by subtracting the maximum value of the cutting area (second physical quantity) caused by the second tool from the maximum value of the cutting area (first physical quantity) caused by the first tool. The simulation unit 113 creates a contour map (hereinafter, also referred to as "third map") showing the distribution of the first difference between the maximum value of the cutting area caused by the first tool and the maximum value of the cutting area caused by the second tool with respect to the axial depth of cut ap and the radial depth of cut ae.

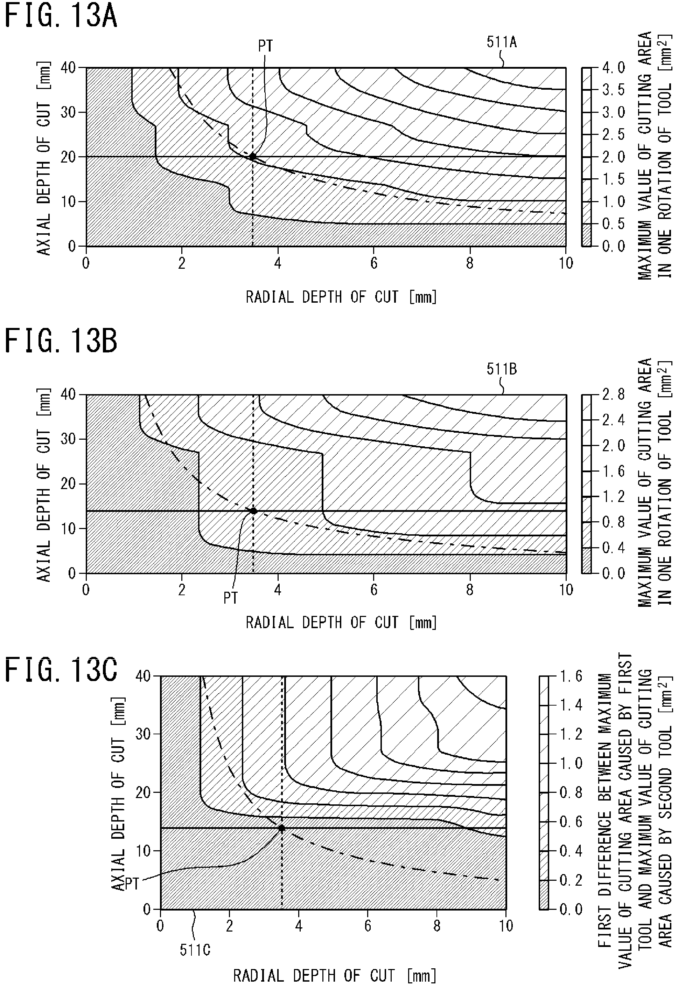

FIG. 13A shows an example of a first map with respect to the first tool. FIG. 13B shows an example of a first map with respect to the second tool. FIG. 13C is a contour map showing an example of the distribution of the first difference between the maximum value of the cutting area caused by the first tool and the maximum value of the cutting area caused by the second tool with respect to the axial depth of cut ap and the radial depth of cut ae. In FIG. 13C, the vertical axis represents the axial depth of cut ap, and the horizontal axis represents the radial depth of cut ae. In the example in FIG. 13C, each hatching corresponds to a color. That is, a third map 511C is colored in accordance with the level of the first difference between the maximum value of the cutting area caused by the first tool and the maximum value of the cutting area caused by the second tool. By referring to the third map, the user can confirm, for example, how much different the maximum value of the cutting area is between the first tool and the second tool at an axial depth of cut and a radial depth of cut that are highly likely to be used.

The third map 511C is a map representing the difference obtained by subtracting, at the same coordinates, the maximum value of the cutting area on a first map 511B with respect to the second tool, from the maximum value of the cutting area on a first map 511A with respect to the first tool.

The third map 511C is information in which the maximum value of the cutting area caused by the first tool is compared with the maximum value of the cutting area caused by the second tool with respect to the axial depth of cut ap and the radial depth of cut ae. For example, based on the third map 511C, in the two-dimensional space represented by the axial depth of cut ap and the radial depth of cut ae, in which region the difference between the maximum value of the cutting area caused by the first tool and the maximum value of the cutting area caused by the second tool is large, and in which region the difference between the maximum value of the cutting area caused by the first tool and the maximum value of the cutting area caused by the second tool is small, are grasped. In another example, based on the third map 511C, how much larger (or smaller) the maximum value of the cutting area caused by the first tool is than the maximum value of the cutting area caused by the second tool at a specific axial depth of cut ap and a specific radial depth of cut ae, is grasped. Thus, the third map 511C is information in which the cutting characteristics of the first tool are compared with the cutting characteristics of the second tool, and is information regarding the interference state of the first tool and the second tool with respect to the workpiece.

With respect to each of a plurality of axial depth of cuts ap and a plurality of radial depth of cuts ae, the simulation unit 113 calculates a difference (hereinafter, also referred to as "second difference") obtained by subtracting the variation width of the cutting area (second physical quantity) caused by the second tool from the variation width of the cutting area (first physical quantity) caused by the first tool. The simulation unit 113 creates a contour map (hereinafter, also referred to as "fourth map") showing the distribution of the second difference between the variation width of the cutting area caused by the first tool and the variation width of the cutting area caused by the second tool with respect to the axial depth of cut ap and the radial depth of cut ae.

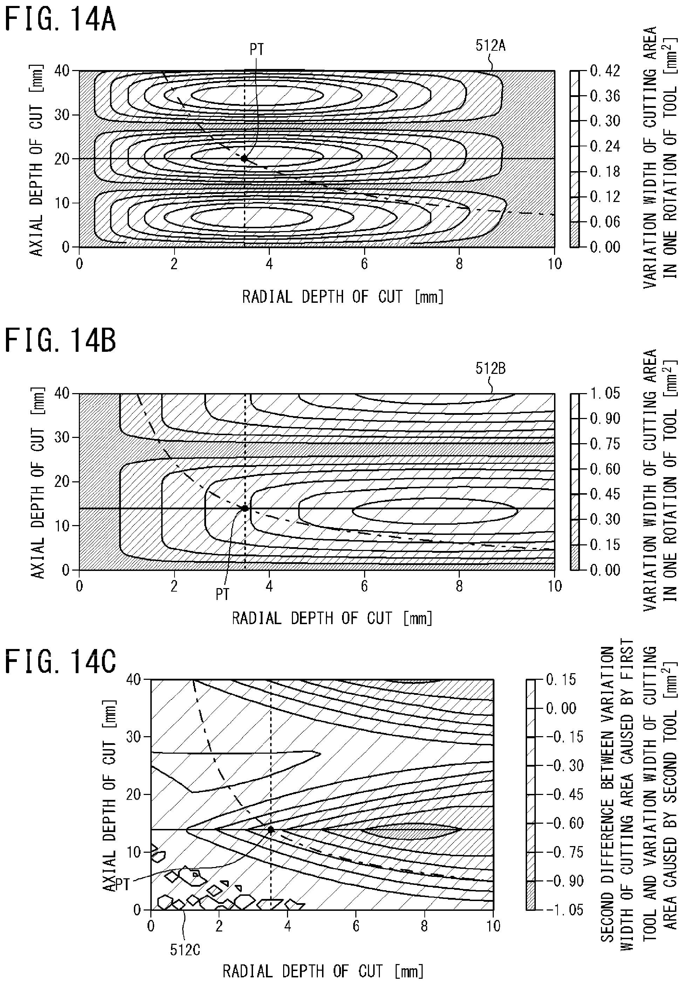

FIG. 14A shows an example of a second map with respect to the first tool. FIG. 14B shows an example of a second map with respect to the second tool. FIG. 14C is a contour map showing an example of the distribution of the second difference between the variation width of the cutting area caused by the first tool and the variation width of the cutting area caused by the second tool with respect to the axial depth of cut ap and the radial depth of cut ae. In FIG. 14C, the vertical axis represents the axial depth of cut ap, and the horizontal axis represents the radial depth of cut ae. In the example in FIG. 14C, each hatching corresponds to a color. That is, a fourth map 512C is colored in accordance with the level of the second difference between the variation width of the cutting area caused by the first tool and the variation width of the cutting area caused by the second tool. By referring to the fourth map, the user can confirm, for example, how much different the variation width of the cutting area is between the first tool and the second tool at an axial depth of cut and a radial depth of cut that are highly likely to be used.

The fourth map 512C is a map representing the difference obtained by subtracting, at the same coordinates, the variation width of the cutting area on a second map 512B with respect to the second tool from the variation width of the cutting area on a second map 512A with respect to the first tool.

The fourth map 512C is information in which the variation width of the cutting area caused by the first tool is compared with the variation width of the cutting area caused by the second tool with respect to the axial depth of cut ap and the radial depth of cut ae. For example, based on the fourth map 512C, in the two-dimensional space represented by the axial depth of cut ap and the radial depth of cut ae, in which region the difference between the variation width of the cutting area caused by the first tool and the variation width of the cutting area caused by the second tool is large, and in which region the difference between the variation width of the cutting area caused by the first tool and the variation width of the cutting area caused by the second tool is small, are grasped. In another example, based on the fourth map 512C, how much larger (or smaller) the variation width of the cutting area caused by the first tool is than the variation width of the cutting area caused by the second tool at a specific axial depth of cut ap and a specific radial depth of cut ae, is grasped. Thus, the fourth map 512C is information in which the cutting characteristics of the first tool are compared with the cutting characteristics of the second tool, and is information regarding the interference state of the first tool and the second tool with respect to the workpiece.

The map information transmitted from the provision unit 114 to the terminal device 200 may include the third map and the fourth map. For example, the map information may include at least one of the third map and the fourth map. In another example, the map information may include at least one of the third map and the fourth map without including the first map and the second map. Accordingly, at least one of the third map and the fourth map can be presented to the user.

The simulation unit 113 creates a graph (hereinafter, also referred to as "ninth graph") showing the relationship between the axial depth of cut ap and the first difference obtained by subtracting the maximum value of the cutting area caused by the second tool from the maximum value of the cutting area caused by the first tool, in a case where the radial depth of cut is at a specific value. Further, the simulation unit 113 creates a graph (hereinafter, also referred to as "tenth graph") showing the relationship between the axial depth of cut ap and the second difference obtained by subtracting the variation width of the cutting area caused by the second tool from the variation width of the cutting area caused by the first tool, in a case where the radial depth of cut is at a specific value. In the present embodiment, the simulation unit 113 creates a figure in which the ninth graph and the tenth graph are superimposed on an identical coordinate system having the axial depth of cut as the first coordinate axis and the cutting area as the second coordinate axis. The simulation unit 113 may create a figure in which the ninth graph and the tenth graph are independent of each other, without superimposing the ninth graph and the tenth graph.

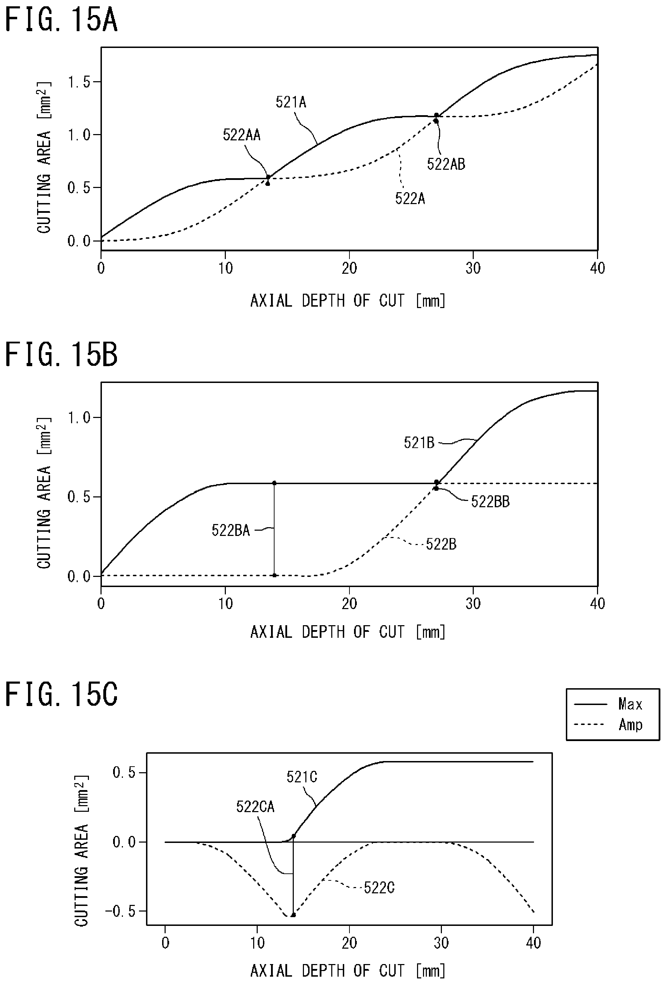

FIG. 15A shows an example of a first graph and a second graph with respect to the first tool. FIG. 15B shows an example of a first graph and a second graph with respect to the second tool. FIG. 15C shows an example of a ninth graph showing the relationship between the axial depth of cut and the first difference obtained by subtracting the maximum value of the cutting area caused by the second tool from the maximum value of the cutting area caused by the first tool, and a tenth graph showing the relationship between the axial depth of cut and the second difference obtained by subtracting the variation width of the cutting area caused by second tool from the variation width of the cutting area caused by the first tool. FIG. 15A shows a first graph 521A and a second graph 522A with respect to the first tool in a case where the radial depth of cut is at a specific value. FIG. 15B shows a first graph 521B and a second graph 522B with respect to the second tool in a case where the radial depth of cut is at the same specific value as above. FIG. 15C shows a ninth graph 521C and a tenth graph 522C in a case where the radial depth of cut is at the same specific value as above.

In the figure in which the first graph 521A and the second graph 522A are superimposed in FIG. 15A, a graphic 522AA indicating the variation width of the cutting area at the second designated value and a graphic 522AB indicating the minimum value of the variation width of the cutting area are shown.

In the figure in which the first graph 521B and the second graph 522B are superimposed in FIG. 15B, a graphic 522BA indicating the variation width of the cutting area at the second designated value and a graphic 522BB indicating the minimum value of the variation width of the cutting area are shown.

In FIG. 15C, the ninth graph 521C is indicated by a solid line, and the tenth graph 522C is indicated by a broken line. In the ninth graph 521C and the tenth graph 522C in FIG. 15C, the radial depth of cut at the specific point PT shown in FIG. 13C and FIG. 14C is used as the specific value. That is, the ninth graph 521C corresponds to a cross-sectional view obtained by cutting the third map 511C at the vertical line (broken line) passing through the specific point PT in FIG. 13C. The tenth graph 522C corresponds to a cross-sectional view obtained by cutting the fourth map 512C at the vertical line (broken line) passing through the specific point PT in FIG. 14C.

For example, the simulation unit 113 can add a graphic 522CA indicating the first difference and the second difference at the second designated value, to the figure in which the ninth graph 521C and the tenth graph 522C are superimposed. The graphic 522CA is a graphic connecting a point on the ninth graph 521C at the second designated value and a point on the tenth graph 522C at the second designated value by a line segment.

The first difference at the second designated value is indicated by the position of the point of the graphic 522CA on the ninth graph 521C. The fact that the first difference is positive indicates that the maximum value of the cutting area caused by the first tool is larger than the maximum value of the cutting area caused by the second tool. Therefore, in this case, the second tool is more advantageous in terms of the life, the possibility of breakage, machining accuracy, falling-off from a jig of the workpiece, and the like. Meanwhile, the fact that the first difference is negative indicates that the maximum value of the cutting area caused by the first tool is smaller than the maximum value of the cutting area caused by the second tool. Therefore, in this case, the first tool is more advantageous in terms of the life, the possibility of breakage, machining accuracy, falling-off from a jig of the workpiece, and the like.

The second difference at the second designated value is indicated by the position of the point of the graphic 522CA on the tenth graph 522C. The fact that the second difference is positive indicates that the variation width of the cutting area caused by the first tool is larger than the variation width of the cutting area caused by the second tool. Therefore, in this case, the second tool is more advantageous in terms of the life, machining accuracy, and the like. Meanwhile, the fact that the second difference is negative indicates that the variation width of the cutting area caused by the first tool is smaller than the variation width of the cutting area caused by the second tool. Therefore, in this case, the first tool is more advantageous in terms of the life, machining accuracy, and the like.

With reference back to FIG. 5, for example, the user may designate a specific value (first designated value) for the radial depth of cut. In a specific example, the user inputs the first designated value for the radial depth of cut into the terminal device 200, by designating a point (the specific point PT) on either one of the third map and the fourth map. The terminal device 200 transmits the inputted first designated value to the server 100 via the network 300. The acceptance unit 111 of the server 100 receives the first designated value transmitted from the terminal device 200, via the network 300. The simulation unit 113 creates a ninth graph and a tenth graph in a case where the radial depth of cut is at the first designated value.

The simulation unit 113 creates a graph (hereinafter, also referred to as "eleventh graph") showing the relationship between the radial depth of cut ae and the first difference obtained by subtracting the maximum value of the cutting area caused by the second tool from the maximum value of the cutting area caused by the first tool, in a case where the axial depth of cut is at a specific value. Further, the simulation unit 113 creates a graph (hereinafter, also referred to as "twelfth graph") showing the relationship between the radial depth of cut ae and the second difference obtained by subtracting the variation width of the cutting area caused by the second tool from the variation width of the cutting area caused by the first tool, in a case where the axial depth of cut is at a specific value. In the present embodiment, the simulation unit 113 creates a figure in which the eleventh graph and the twelfth graph are superimposed on an identical coordinate system having the radial depth of cut as the first coordinate axis and the cutting area as the second coordinate axis. The simulation unit 113 may create a figure in which the eleventh graph and the twelfth graph are independent of each other, without superimposing the eleventh graph and the twelfth graph.

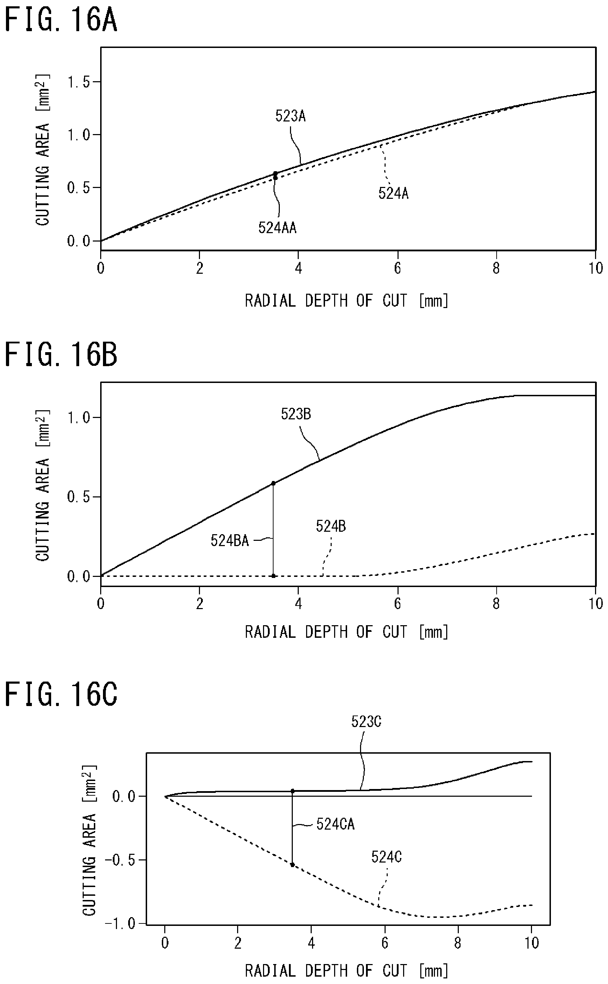

FIG. 16A shows an example of a third graph and a fourth graph with respect to the first tool. FIG. 16B shows an example of a third graph and a fourth graph with respect to the second tool. FIG. 16C shows an example of an eleventh graph showing the relationship between the radial depth of cut and the first difference obtained by subtracting the maximum value of the cutting area caused by the second tool from the maximum value of the cutting area caused by the first tool, and a twelfth graph showing the relationship between the radial depth of cut and the second difference obtained by subtracting the variation width of the cutting area caused by the second tool from the variation width of the cutting area caused by the first tool. FIG. 16A shows a third graph 523A and a fourth graph 524A with respect to the first tool in a case where the axial depth of cut is at a specific value. FIG. 16B shows a third graph 523B and a fourth graph 524B with respect to the second tool in a case where the axial depth of cut is at the same specific value as above. FIG. 16C shows an eleventh graph 523C and a twelfth graph 524C in a case where the axial depth of cut is at the same specific value as above.

In the figure in which the third graph 523A and the fourth graph 524A are superimposed in FIG. 16A, a graphic 524AA indicating the variation width of the cutting area at the first designated value is shown.

In the figure in which the third graph 523B and the fourth graph 524B are superimposed in FIG. 16B, a graphic 524BA indicating the variation width of the cutting area at the first designated value is shown.

In FIG. 16C, the eleventh graph 523C is indicated by a solid line, and the twelfth graph 524C is indicated by a broken line. In the eleventh graph 523C and the twelfth graph 524C in FIG. 16C, the axial depth of cut at the specific point PT shown in FIG. 13C and FIG. 14C is used as the specific value. That is, the eleventh graph 523C corresponds to a cross-sectional view obtained by cutting the third map 511C at the horizontal line (solid line) passing through the specific point PT in FIG. 13C. The twelfth graph 524C corresponds to a cross-sectional view obtained by cutting the fourth map 512C at the horizontal line (solid line) passing through the specific point PT in FIG. 14C.

For example, the simulation unit 113 can add a graphic 524CA indicating the first difference and the second difference at the first designated value, to the figure in which the eleventh graph 523C and the twelfth graph 524C are superimposed. The graphic 524CA is a graphic connecting a point on the eleventh graph 523C at the first designated value and a point on the twelfth graph 524C at the first designated value by a line segment.

The first difference at the first designated value is indicated by the position of the point of the graphic 524CA on the eleventh graph 523C. Similar to the graphic 522CA described above, based on the magnitude of the first difference indicated by the graphic 524CA, advantage or disadvantage with respect to the life, the possibility of breakage, machining accuracy, falling-off from a jig of the workpiece, and the like can be evaluated between the first tool and the second tool.

The second difference at the first designated value is indicated by the position of the point of the graphic 524CA on the twelfth graph 524C. Similar to the graphic 522CA described above, based on the magnitude of the second difference indicated by the graphic 524CA, advantage or disadvantage with respect to the life, machining accuracy, and the like can be evaluated between the first tool and the second tool.

With reference back to FIG. 5, for example, the user may designate a specific value (second designated value) for the axial depth of cut. In a specific example, the user inputs the second designated value for the axial depth of cut into the terminal device 200, by designating a point (the specific point PT) on either one of the third map and the fourth map. The terminal device 200 transmits the inputted second designated value to the server 100 via the network 300. The acceptance unit 111 of the server 100 receives the second designated value transmitted from the terminal device 200, via the network 300. The simulation unit 113 creates an eleventh graph and a twelfth graph in a case where the axial depth of cut is at the second designated value.

The graph information transmitted from the provision unit 114 to the terminal device 200 may include the ninth graph, the tenth graph, the eleventh graph, and the twelfth graph. For example, the graph information may include at least one of the ninth graph, the tenth graph, the eleventh graph, and the twelfth graph. In another example, the graph information may include at least one of the ninth graph, the tenth graph, the eleventh graph, and the twelfth graph, without including the first graph, the second graph, the third graph, the fourth graph, the fifth graph, the sixth graph, the seventh graph, and the eighth graph. Accordingly, at least one of the ninth graph, the tenth graph, the eleventh graph, and the twelfth graph can be presented to the user.

The simulation unit 113 further creates a graph (hereinafter, also referred to as "thirteenth graph") showing the relationship between the radial depth of cut ae and the first difference obtained by subtracting the maximum value of the cutting area caused by the second tool from the maximum value of the cutting area caused by the first tool, in a case where the cutting volume of the workpiece in one rotation of the tool is at a specific fixed value. Further, the simulation unit 113 creates a graph (hereinafter, also referred to as "fourteenth graph") showing the relationship between the radial depth of cut ae and the second difference obtained by subtracting the variation width of the cutting area caused by the second tool from the variation width of the cutting area caused by the first tool, in a case where the cutting volume of the workpiece in one rotation of the tool is at a specific fixed value. In the present embodiment, the simulation unit 113 creates a figure in which the thirteenth graph and the fourteenth graph are superimposed on an identical coordinate system having the radial depth of cut as the first coordinate axis and the cutting area as the second coordinate axis. The simulation unit 113 may create a figure in which the thirteenth graph and the fourteenth graph are independent of each other, without superimposing the thirteenth graph and the fourteenth graph.

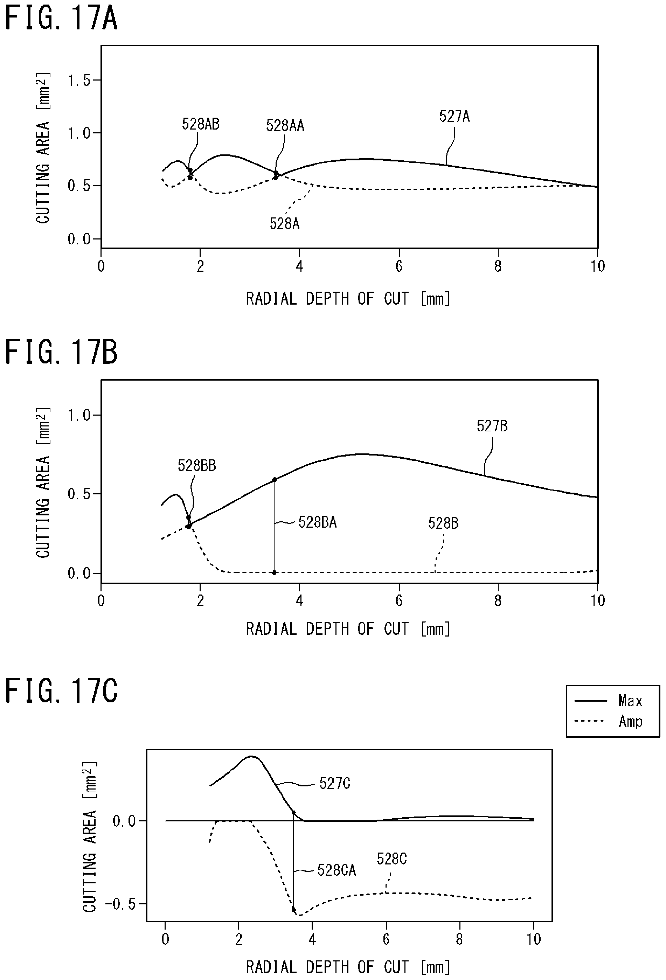

FIG. 17A shows an example of a seventh graph and an eighth graph with respect to the first tool. FIG. 17B shows an example of a seventh graph and an eighth graph with respect to the second tool. FIG. 17C shows an example of a thirteenth graph showing the relationship between the radial depth of cut and the first difference obtained by subtracting the maximum value of the cutting area caused by the second tool from the maximum value of the cutting area caused by the first tool, and a fourteenth graph showing the relationship between the radial depth of cut and the second difference obtained by subtracting the variation width of the cutting area caused by the second tool from the variation width of the cutting area caused by the first tool. FIG. 17A shows a seventh graph 527A and an eighth graph 528A with respect to the first tool in a case where the cutting volume of the workpiece in one rotation of the tool is at a specific fixed value. FIG. 17B shows a seventh graph 527B and an eighth graph 528B with respect to the second tool in a case where the cutting volume is at the same specific value as above. FIG. 17C shows a thirteenth graph 527C and a fourteenth graph 528C in a case where the cutting volume is at the same specific value as above.

In the figure in which the seventh graph 527A and the eighth graph 528A are superimposed in FIG. 17A, a graphic 528AA indicating the variation width of the cutting area at the first designated value is shown. Further in this figure, a graphic 528AB indicating the minimum value of the variation width of the cutting area is shown.

In the figure in which the seventh graph 527B and the eighth graph 528B are superimposed in FIG. 17B, a graphic 528BA indicating the variation width of the cutting area at the first designated value is shown. Further in this figure, a graphic 528BB indicating the minimum value of the variation width of the cutting area is shown.

In FIG. 17C, the thirteenth graph 527C is indicated by a solid line, and the fourteenth graph 528C is indicated by a broken line. In the thirteenth graph 527C and the fourteenth graph 528C in FIG. 17C, the cutting area at the specific point PT shown in FIG. 13C and FIG. 14C is used as the specific value. That is, the thirteenth graph 527C corresponds to a figure observed when a cross-sectional view obtained by cutting the third map 511C at the curve (alternate long and short dash line) that passes through the specific point PT in FIG. 13C and in which the product of the axial depth of cut ap and the radial depth of cut ae is constant, is viewed in the vertical axis direction. The fourteenth graph 528C corresponds to a figure observed when a cross-sectional view obtained by cutting the fourth map 512C at the curve (alternate long and short dash line) that passes through the specific point PT in FIG. 14C and in which the product of the axial depth of cut ap and the radial depth of cut ae is constant, is viewed in the vertical axis direction.

For example, the simulation unit 113 can add a graphic 528CA indicating the first difference and the second difference at the first designated value, to the figure in which the thirteenth graph 527C and the fourteenth graph 528C are superimposed. The graphic 528CA is a graphic connecting a point on the thirteenth graph 527C at the first designated value and a point on the fourteenth graph 528C at the first designated value by a line segment.

The first difference at the first designated value is indicated by the position of the point of the graphic 528CA on the thirteenth graph 527C. Similar to the graphic 522CA described above, based on the magnitude of the first difference indicated by the graphic 528CA, advantage or disadvantage with respect to the life, the possibility of breakage, machining accuracy, falling-off from a jig of the workpiece, and the like can be evaluated between the first tool and the second tool.

The second difference at the first designated value is indicated by the position of the point of the graphic 528CA on the fourteenth graph 528C. Similar to the graphic 522CA described above, based on the magnitude of the second difference indicated by the graphic 528CA, advantage or disadvantage with respect to the life, machining accuracy, and the like can be evaluated between the first tool and the second tool.

With reference back to FIG. 5, for example, the user may designate a fixed value of the cutting volume by designating the specific point PT on either one of the third map and the fourth map. That is, by designating the specific point PT to simultaneously input a first designated value and a second designated value, the user can designate a cutting volume being the product of the first designated value and the second designated value. The terminal device 200 transmits the inputted first designated value and second designated value to the server 100 via the network 300. The acceptance unit 111 of the server 100 receives the first designated value and the second designated value transmitted from the terminal device 200, via the network 300. The simulation unit 113 creates a thirteenth graph and a fourteenth graph in a case where the cutting volume is fixed to the product of the first designated value and the second designated value.

The simulation unit 113 further creates a graph (hereinafter, also referred to as "fifteenth graph") showing the relationship between the radial depth of cut ae and the first difference obtained by subtracting the maximum value of the cutting area caused by the second tool from the maximum value of the cutting area caused by the first tool, in a case where the cutting volume of the workpiece in one rotation of the tool is at a specific fixed value. Further, the simulation unit 113 creates a graph (hereinafter, also referred to as "sixteenth graph") showing the relationship between the radial depth of cut ae and the second difference obtained by subtracting the variation width of the cutting area caused by the second tool from the variation width of the cutting area caused by the first tool, in a case where the cutting volume of the workpiece in one rotation of the tool is at a specific fixed value. In the present embodiment, the simulation unit 113 creates a figure in which the fifteenth graph and the sixteenth graph are superimposed on an identical coordinate system having the radial depth of cut as the first coordinate axis and the cutting area as the second coordinate axis. The simulation unit 113 may create a figure in which the fifteenth graph and the sixteenth graph are independent of each other, without superimposing the fifteenth graph and the sixteenth graph. Since the fifteenth graph and the sixteenth graph are the same as the thirteenth graph and the fourteenth graph except that the first axis is the radial depth of cut, drawings and description thereof are omitted.

The graph information transmitted from the provision unit 114 to the terminal device 200 may include the thirteenth graph, the fourteenth graph, the fifteenth graph, and the sixteenth graph. For example, the graph information may include at least one of the thirteenth graph, the fourteenth graph, the fifteenth graph, and the sixteenth graph. In another example, the graph information may include at least one of the thirteenth graph, the fourteenth graph, the fifteenth graph, and the sixteenth graph, without including the first graph, the second graph, the third graph, the fourth graph, the fifth graph, the sixth graph, the seventh graph, the eighth graph, the ninth graph, the tenth graph, the eleventh graph, and the twelfth graph. Accordingly, at least one of the thirteenth graph, the fourteenth graph, the fifteenth graph, and the sixteenth graph can be presented to the user.

The server 100 can present, to the user, information obtained by performing frequency analysis on the cutting characteristics of the tool. Frequency analysis of the cutting characteristics of the tool is useful for a tool having an unequal pitch or an unequal lead in particular. Here, "unequal pitch" means that pitches of respective teeth of the tool are different, and "unequal lead" means that helix angles of the respective teeth of the tool are different.

The simulation unit 113 performs frequency conversion on the cutting area that changes over time, and calculates a frequency spectrum of the cutting area. For the frequency conversion, fast Fourier transform is used, for example.

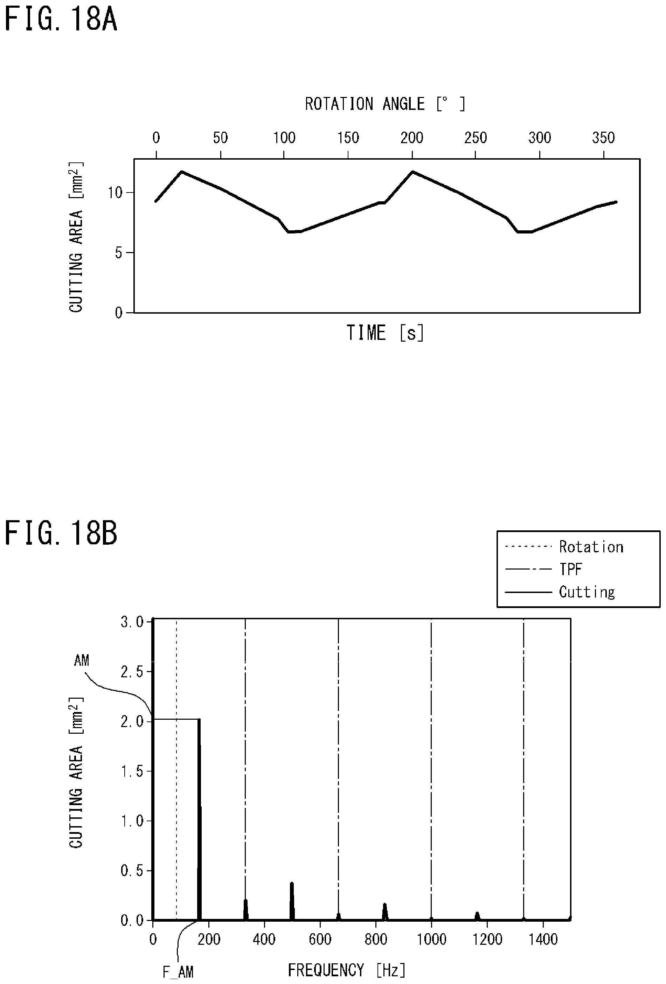

FIG. 18A is a graph showing an example of temporal variation in the cutting area caused by a tool having an unequal pitch. In FIG. 18A, the vertical axis represents cutting area, and the horizontal axis represents time. Since the tool rotates at a constant speed, the horizontal axis also corresponds to the rotation angle of the tool. As in the example in FIG. 18A, the cutting area caused by a tool having an unequal pitch or an unequal lead exhibits a complicated pattern over time. FIG. 18B is a graph showing a result obtained by performing frequency conversion on the temporal variation in the cutting area in the example in FIG. 18A. In FIG. 18B, the vertical axis represents cutting area, and the horizontal axis represents frequency. As shown in FIG. 18B, the cutting area exhibits peaks at specific frequencies (in the example in FIG. 18B, about 160 Hz, about 330 Hz, about 490 Hz, about 660 Hz, about 830 Hz, about 1000 Hz, about 1160 Hz, and about 1330 Hz), excluding 0 Hz. In the example in FIG. 18B, a maximum peak AM of the cutting area is about 2.0 mm². The maximum peak AM of the cutting area corresponds to the maximum value of the cutting area at a frequency component higher than 0 Hz. A frequency F_AM at which the maximum peak AM of the cutting area appears is about 160 Hz. The frequency F_AM is the frequency showing the maximum value of the cutting area at a frequency component higher than 0 Hz.

The simulation unit 113 creates a contour map (hereinafter, also referred to as "fifth map") showing the distribution of the maximum value at a frequency component higher than 0 Hz in the frequency spectrum of the cutting area with respect to each of the axial depth of cut and the radial depth of cut. In the example in FIG. 18B, the maximum value (excluding the cutting area at 0 Hz) of the cutting area is about 2.0 mm² at about 160 Hz. The simulation unit 113 calculates such a maximum value of the cutting area with respect to each axial depth of cut and each radial depth of cut, and records the maximum value of the cutting area into a coordinate space having the axial depth of cut as the first coordinate axis and the radial depth of cut as the second coordinate axis, thereby creating a fifth map.

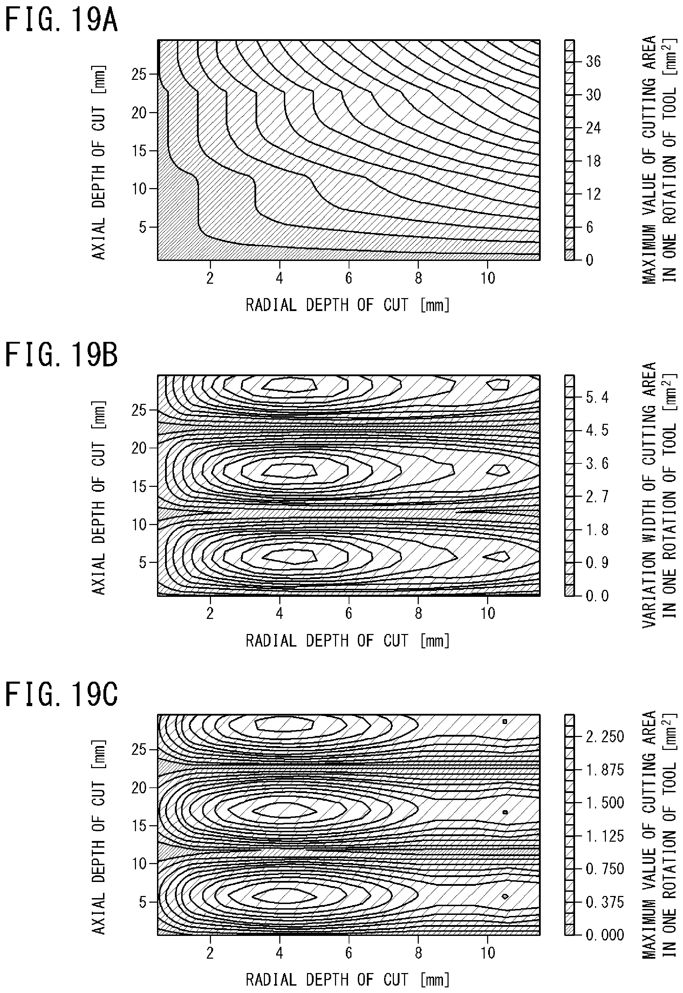

FIG. 19A shows an example of a first map with respect to a tool A (tool diameter of 12 mm and the number of teeth of 4) having an equal pitch (the pitches of all the teeth are equal) and an equal lead (the helix angles of all the teeth are equal). FIG. 19B shows an example of a second map with respect to the tool A. FIG. 19C is a contour map (fifth map) showing an example of the distribution of the maximum value at a frequency component higher than 0 Hz in a frequency spectrum of the cutting area caused by the tool A with respect to each of the axial depth of cut and the radial depth of cut. In FIG. 19C, the vertical axis represents the axial depth of cut ap, and the horizontal axis represents the radial depth of cut ae. In the example in FIG. 19C, each hatching corresponds to a color. That is, the fifth map is colored in accordance with the level of the maximum value of the cutting area caused by the tool. By referring to the fifth map, the user can confirm, for example, the level of the maximum value of the cutting area in the frequency spectrum at an axial depth of cut and a radial depth of cut that are highly likely to be used.

As understood from comparison between FIG. 19A and FIG. 19C, in the tool A having an equal pitch and an equal lead, the distribution with respect to the axial depth of cut and the radial depth of cut of the maximum value of the cutting area in the frequency domain is completely different from the distribution with respect to the axial depth of cut and the radial depth of cut of the maximum value of the cutting area in the time domain. Meanwhile, as understood from comparison between FIG. 19B and FIG. 19C, in the tool A having an equal pitch and an equal lead, the distribution with respect to the axial depth of cut and the radial depth of cut of the variation width of the cutting area in the time domain generally matches the distribution with respect to the axial depth of cut and the radial depth of cut of the maximum value of the cutting area in the frequency domain.

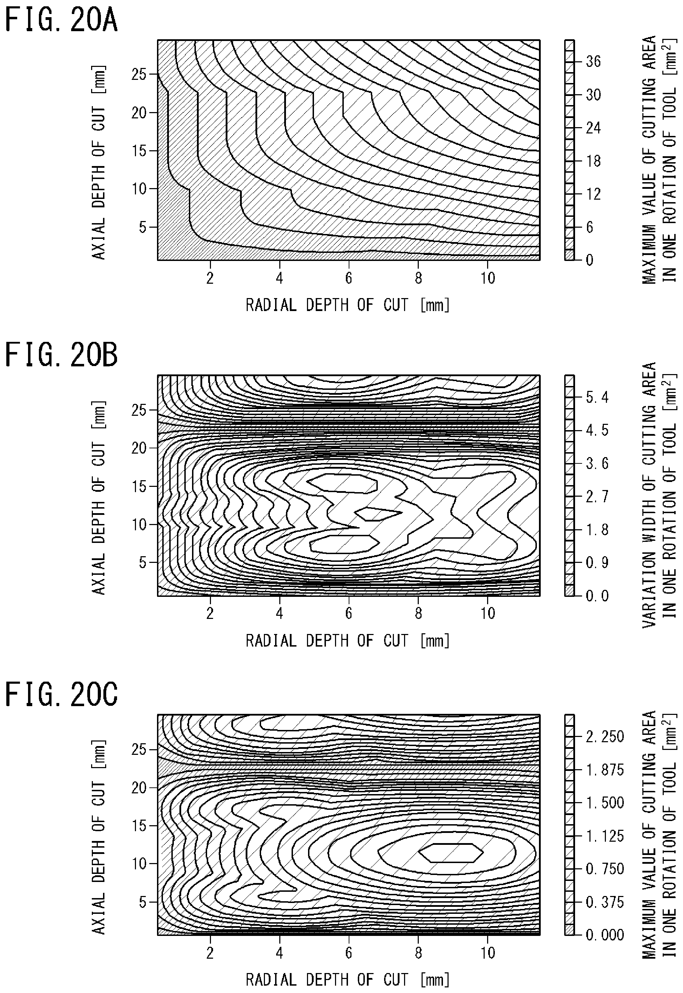

FIG. 20A shows an example of a first map with respect to a tool B (tool diameter of 12 mm and the number of teeth of 4) having an unequal pitch and an equal lead. FIG. 20B shows an example of a second map with respect to the tool B. FIG. 20C shows an example of a fifth map with respect to the tool B.

As understood from comparison between FIG. 20A and FIG. 20C, also in the tool B having an unequal pitch and an equal lead, the distribution with respect to the axial depth of cut and the radial depth of cut of the maximum value of the cutting area in the frequency domain is completely different from the distribution with respect to the axial depth of cut and the radial depth of cut of the maximum value of the cutting area in the time domain. Meanwhile, as understood from comparison between FIG. 20B and FIG. 20C, in the tool B having an unequal pitch and an equal lead, the distribution pattern with respect to the axial depth of cut and the radial depth of cut of the maximum value of the cutting area in the frequency domain approximates, to some extent, the distribution pattern with respect to the axial depth of cut and the radial depth of cut of the variation width of the cutting area in the time domain, but is more different from that in the tool A (FIG. 19B and FIG. 19C) having an equal pitch and an equal lead. That is, it is understood that the frequency characteristic of the tool B having an unequal pitch appears strongly in the fifth map.

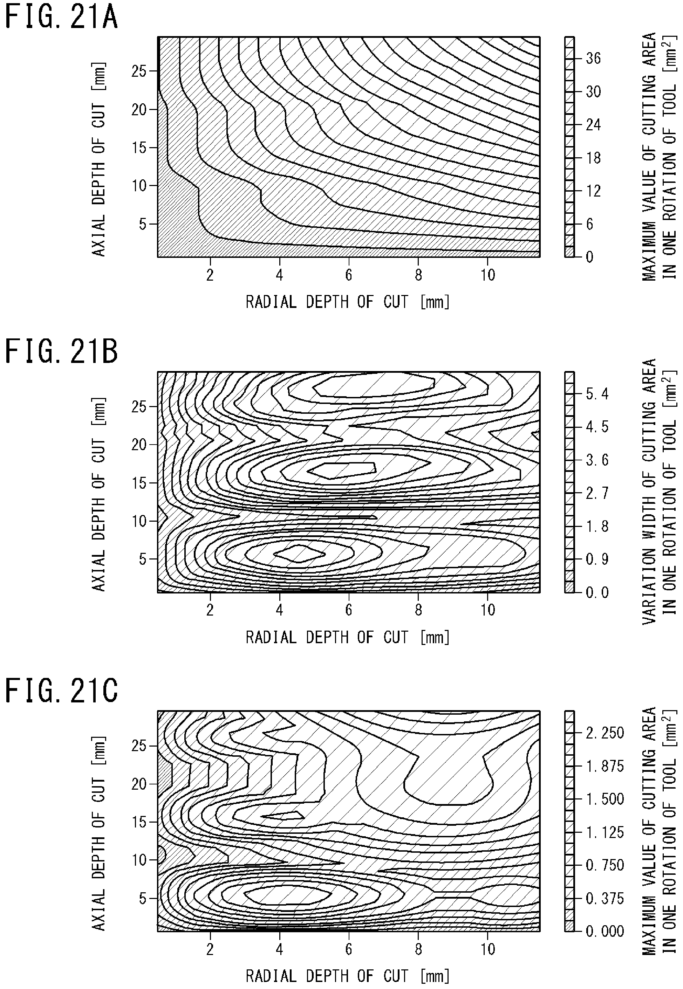

FIG. 21A shows an example of a first map with respect to a tool C (tool diameter of 12 mm and the number of teeth of 4) having an equal pitch and an unequal lead. FIG. 21B shows an example of a second map with respect to the tool C. FIG. 21C shows an example of a fifth map with respect to the tool C.

As understood from comparison between FIG. 21A and FIG. 21C, also in the tool C having an equal pitch and an unequal lead, the distribution with respect to the axial depth of cut and the radial depth of cut of the maximum value of the cutting area in the frequency domain is completely different from the distribution with respect to the axial depth of cut and the radial depth of cut of the maximum value of the cutting area in the time domain. As understood from comparison between FIG. 21B and FIG. 21C, in the tool C having an equal pitch and an unequal lead, the distribution pattern with respect to the axial depth of cut and the radial depth of cut of the maximum value of the cutting area in the frequency domain approximates, to some extent, the distribution pattern with respect to the axial depth of cut and the radial depth of cut of the variation width of the cutting area in the time domain, but is more different from that in the tool A (FIG. 19B and FIG. 19C) having an equal pitch and an equal lead. That is, it is understood that the frequency characteristic of the tool C having an unequal lead strongly appears in the fifth map.

With reference back to FIG. 5, the simulation unit 113 further creates a contour map (hereinafter, also referred to as "sixth map") showing the distribution of the frequency showing the maximum value at a frequency component higher than 0 Hz in the frequency spectrum of the cutting area, with respect to each of the axial depth of cut and the radial depth of cut. In the example in FIG. 18B, the maximum value (excluding the cutting area at 0 Hz) of the cutting area appears at about 160 Hz. The simulation unit 113 calculates a frequency showing such a maximum value of the cutting area, with respect to each axial depth of cut and each radial depth of cut, and records the frequency showing the maximum value of the cutting area, into a coordinate space having the axial depth of cut as the first coordinate axis and the radial depth of cut as the second coordinate axis, thereby creating a sixth map.

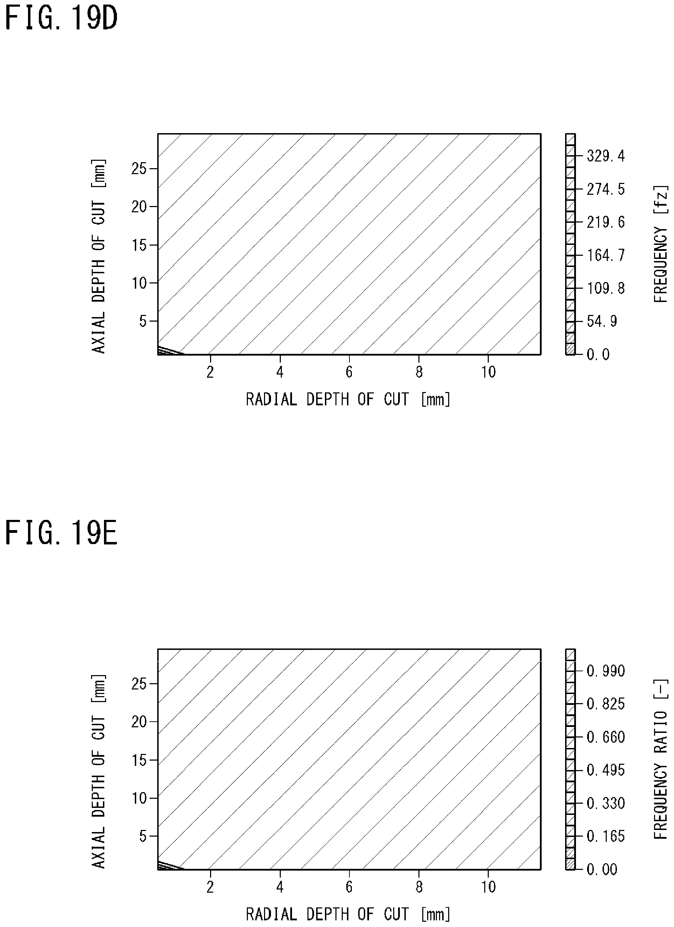

FIG. 19D is a contour map (sixth map) showing an example of the distribution of the frequency showing the maximum value at a frequency component higher than 0 Hz in the frequency spectrum of the cutting area caused by the tool A, with respect to each of the axial depth of cut and the radial depth of cut. In FIG. 19D, the vertical axis represents the axial depth of cut ap, and the horizontal axis represents the radial depth of cut ae. In the example in FIG. 19D, each hatching corresponds to a color. That is, the sixth map is colored in accordance with the level of the frequency showing the maximum value of the cutting area caused by the tool. By referring to the sixth map, the user can confirm, for example, the frequency level at the maximum value of the cutting area at an axial depth of cut and a radial depth of cut that are highly likely to be used.

In a tool having an equal pitch and an equal lead, the frequency characteristic of the cutting area hardly changes irrespective of change in the axial depth of cut and the radial depth of cut. Therefore, in the frequency spectrum of the cutting area, the maximum value of the cutting area at a frequency component higher than 0 Hz appears substantially at the same frequency. Therefore, in the sixth map with respect to the tool A, a uniform frequency level is shown in the entirety of the axial depth of cut and the radial depth of cut.

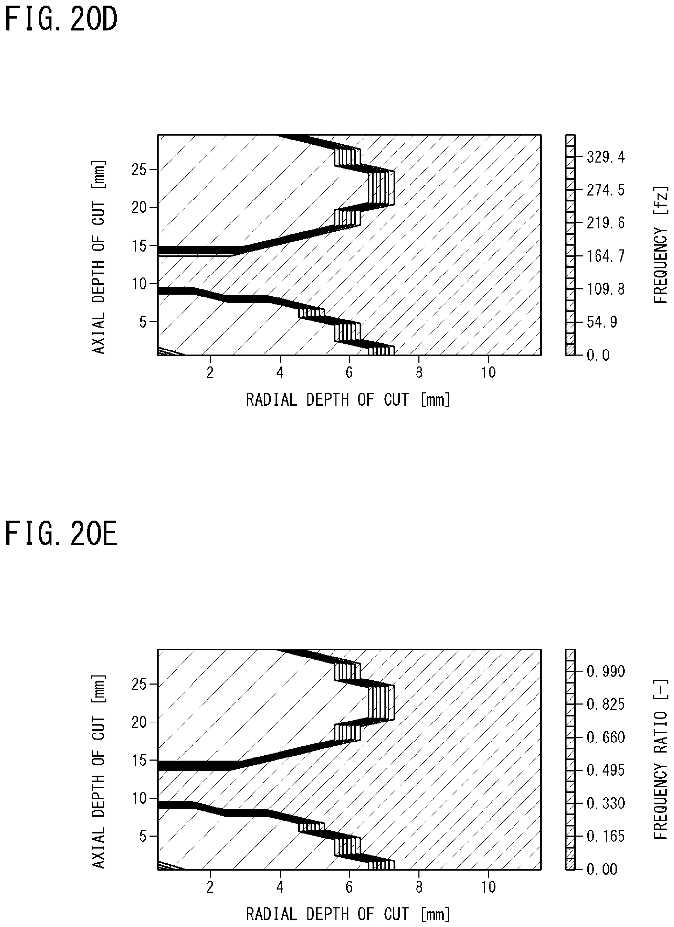

FIG. 20D shows an example of a sixth map with respect to the tool B. In a tool having an unequal pitch and an equal lead, the frequency characteristic of the cutting area changes in accordance with change in the axial depth of cut and the radial depth of cut. Therefore, in the frequency spectrum of the cutting area, the maximum value of the cutting area at a frequency component higher than 0 Hz changes in accordance with the axial depth of cut and the radial depth of cut. Thus, it is understood that the frequency characteristic of the tool B having an unequal pitch strongly appears in the sixth map.

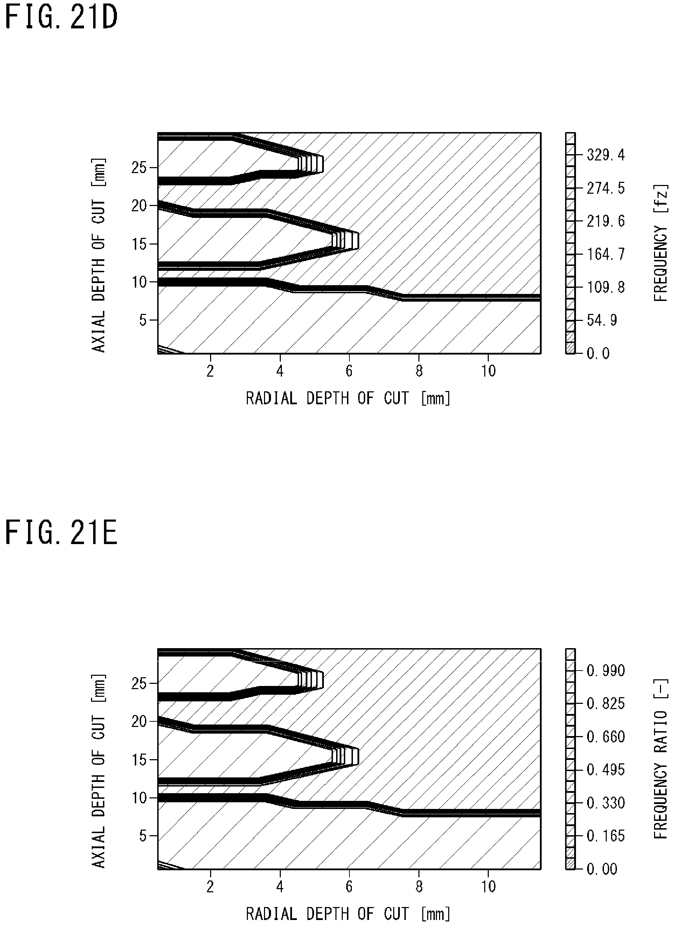

FIG. 21D shows an example of a sixth map with respect to the tool C. In a tool having an equal pitch and an unequal lead, the frequency characteristic of the cutting area changes in accordance with change in the axial depth of cut and the radial depth of cut. Therefore, in the frequency spectrum of the cutting area, the maximum value of the cutting area at a frequency component higher than 0 Hz changes in accordance with the axial depth of cut and the radial depth of cut. Thus, it is understood that the frequency characteristic of the tool C having an unequal lead strongly appears in the sixth map.

With reference back to FIG. 5, the simulation unit 113 further creates a contour map (hereinafter, also referred to as "seventh map") showing the distribution of the ratio of the frequency showing the maximum value at a frequency component higher than 0 Hz in the frequency spectrum of the cutting area, relative to the rotation frequency of the tool, with respect to each of the axial depth of cut and the radial depth of cut. As described above, in the example in FIG. 18B, the maximum value (excluding the cutting area at 0 Hz) of the cutting area appears at about 160 Hz. The simulation unit 113 calculates a frequency showing such a maximum value of the cutting area, with respect to each axial depth of cut and each radial depth of cut, and calculates the ratio (hereinafter, also referred to as "frequency ratio") of the calculated frequency relative to the cutting frequency of the teeth of the tool. The simulation unit 113 records the frequency ratio into a coordinate space having the axial depth of cut as the first coordinate axis and the radial depth of cut as the second coordinate axis, thereby creating a seventh map.

FIG. 19E is a contour map (seventh map) showing an example of the distribution of the ratio (frequency ratio) of the frequency showing the maximum value at a frequency component higher than 0 Hz in the frequency spectrum of the cutting area caused by the tool A, relative to the cutting frequency of the teeth of the tool A, with respect to each of the axial depth of cut and the radial depth of cut. In FIG. 19E, the vertical axis represents the axial depth of cut ap, and the horizontal axis represents the radial depth of cut ae. In the example in FIG. 19E, each hatching corresponds to a color. That is, the seventh map is colored in accordance with the level of the ratio of the frequency showing the maximum value of the cutting area caused by the tool, relative to the rotation frequency of the tool. By referring to the seventh map, the user can confirm, for example, the level of the frequency at the maximum value of the cutting area relative to the rotation frequency of the tool, at an axial depth of cut and a radial depth of cut that are highly likely to be used.

In a tool having an equal pitch and an equal lead, the frequency characteristic of the cutting area hardly changes irrespective of change in the axial depth of cut and the radial depth of cut. Therefore, as described above, in the frequency spectrum of the cutting area, the maximum value of the cutting area at a frequency component higher than 0 Hz appears substantially at the same frequency. In the seventh map with respect to the tool A, a uniform frequency ratio is shown in the entirety of the axial depth of cut and the radial depth of cut.

FIG. 20E shows an example of a seventh map with respect to the tool B. In a tool having an unequal pitch and an equal lead, the frequency characteristic of the cutting area changes in accordance with change in the axial depth of cut and the radial depth of cut. Therefore, the frequency ratio changes in accordance with the axial depth of cut and the radial depth of cut. Thus, it is understood that the frequency characteristic of the tool B having an unequal pitch strongly appears in the seventh map.

FIG. 21E shows an example of a seventh map with respect to the tool C. In a tool having an equal pitch and an unequal lead, the frequency characteristic of the cutting area changes in accordance with change in the axial depth of cut and the radial depth of cut. Therefore, the frequency ratio changes in accordance with the axial depth of cut and the radial depth of cut. Thus, it is understood that the frequency characteristic of the tool C having an unequal lead strongly appears in the seventh map.

The server 100 can determine whether or not the tool is suitable for the cutting machining under a specific condition, and present the determination result to the user.

With reference back to FIG. 5, when at least one of the radial depth of cut and the axial depth of cut satisfies a specific condition, the determination unit 115 determines whether or not the maximum value of the cutting area in one rotation of the tool falls within a first allowable range. Hereinafter, the determination as to whether or not the maximum value of the cutting area in one rotation of the tool falls within the first allowable range will also be referred to as "first determination".

The above specific condition (hereinafter, also referred to as "first setting condition") is set in the server 100. For example, the first setting condition is a condition designated by the user. In a specific example, the user designates a range of the radial depth of cut and a range of the axial depth of cut in which the tool is to be used, and sets the ranges, as the first setting condition, into the server 100.

For example, the first allowable range is set in the server 100 by the user. The first allowable range may be stored in advance in the nonvolatile memory 102 of the server 100, or may be designated by the user every time when the first determination is performed. In another example, the first allowable range is determined independently of the user. In a specific example, the determination unit 115 determines the first allowable range, based on the local minimum value, obtained when either one of the axial depth of cut and the radial depth of cut is varied, of the maximum value of the cutting area. For example, when a range of the axial depth of cut has been designated as the first setting condition, the determination unit 115 can specify the local minimum value, obtained when the axial depth of cut is varied, of the maximum value of the cutting area, and can determine a range from the specified local minimum value to a value larger than the local minimum value by a predetermined amount, as the first allowable range (e.g., when the local minimum value is 0 and the predetermined amount is 0.3 mm², the first allowable range is 0 or more and 0.3 mm² or less). The first allowable range for the radial depth of cut can also be determined in a similar manner.

For example, when the maximum value of the cutting area per rotation of the tool in a first set range is 0.25 mm² and the first allowable range is 0 or more and 0.3 mm² or less, the determination unit 115 determines that the maximum value of the cutting area falls within the first allowable range. For example, when the maximum value of the cutting area per rotation of the tool in the first set range is 0.35 mm² and the first allowable range is 0 or more and 0.3 mm² or less, the determination unit 115 determines that the maximum value of the cutting area does not fall within the first allowable range.

The provision unit 114 can provide the user with the result (hereinafter, also referred to as "first determination result") of the first determination made by the determination unit 115. In a specific example, the provision unit 114 transmits the first determination result to the terminal device 200. The terminal device 200 receives the first determination result and displays the received first determination result.

When at least one of the radial depth of cut and the axial depth of cut satisfies a specific condition, the determination unit 115 determines whether or not the variation width of the cutting area in one rotation of the tool falls within a second allowable range. Hereinafter, the determination as to whether or not the variation width of the cutting area in one rotation of the tool falls within the second allowable range will also be referred to as "second determination".

The above specific condition (also referred to as "second setting condition") is set in the server 100. For example, the second setting condition is a condition designated by the user. In a specific example, the user designates a range of the radial depth of cut and a range of the axial depth of cut in which the tool is to be used, and sets the ranges, as the second setting condition, into the server 100. The second setting condition may be the same as the first setting condition.

For example, the second allowable range is set in the server 100 by the user. The second allowable range may be stored in advance in the nonvolatile memory 102 of the server 100, or may be designated by the user every time when the second determination is performed. In another example, the second allowable range is determined independently of the user. In a specific example, the determination unit 115 determines the second allowable range, based on the local minimum value, obtained when either one of the axial depth of cut and the radial depth of cut is varied, of the variation width of the cutting area. For example, when a range of the axial depth of cut has been designated as the second setting condition, the determination unit 115 can specify the local minimum value, obtained when the axial depth of cut is varied, of the variation width of the cutting area, and can determine a range from the specified local minimum value to a value larger than the local minimum value by a predetermined amount, as the second allowable range (e.g., when the local minimum value is 0 and the predetermined amount is 0.15 mm², the second allowable range is 0 or more and 0.15 mm² or less). The second allowable range for the radial depth of cut can also be determined in a similar manner.

For example, when the variation width of the cutting area per rotation of the tool in a second set range is 0.1 mm² and the second allowable range is 0 or more and 0.15 mm² or less, the determination unit 115 determines that the variation width of the cutting area falls within the second allowable range. For example, when the variation width of the cutting area per rotation of the tool in the second set range is 0.3 mm² and the second allowable range is 0 or more and 0.15 mm² or less, the determination unit 115 determines that the variation width of the cutting area does not fall within the second allowable range.

The provision unit 114 can provide the user with the result (hereinafter, also referred to as "second determination result") of the second determination made by the determination unit 115. In a specific example, the provision unit 114 transmits the second determination result to the terminal device 200. The terminal device 200 receives the second determination result and displays the received second determination result.

The provision unit 114 may provide the user with information obtained by integrating the first determination result and the second determination result. For example, the provision unit 114 may cause the terminal device 200 to display a screen including both the first determination result and the second determination result. For example, when the first setting condition and the second setting condition are equal to each other and both the first determination result and the second determination result are positive (i.e., the maximum value of the cutting area falls within the first allowable range and the variation width of the cutting area falls within the second allowable range), the provision unit 114 may provide the user with a determination result that the tool is suitable for the cutting machining under the first setting condition (second setting condition). For example, when the first setting condition and the second setting condition are equal to each other and at least one of the first determination result and the second determination result is negative (i.e., the maximum value of the cutting area is outside the first allowable range, or the variation width of the cutting area is outside the second allowable range), the provision unit 114 may provide the user with a determination result that the tool is not suitable for the cutting machining under the first setting condition (second setting condition).

When the first determination result is negative, the determination unit 115 may determine the radial depth of cut and the axial depth of cut at which the maximum value of the cutting area in one rotation of the tool falls within the first allowable range, as a machining condition (hereinafter, also referred to as "first recommendation condition") suitable for the cutting machining. When the second determination result is negative, the determination unit 115 may determine the radial depth of cut and the axial depth of cut at which the variation width of the cutting area in one rotation of the tool falls within the second allowable range, as a machining condition (hereinafter, also referred to as "second recommendation condition") suitable for the cutting machining.

The server 100 can select a tool most suitable for a specific machining condition from among a plurality of tools, and present information on the selected tool to the user.

The selection unit 116 executes a selection process of selecting one or a plurality of tools from among a plurality of tools, based on the cutting area in one rotation of the tool. In a specific example, the selection process is a process of selecting, from among a plurality of tools, a tool in which the local minimum value, obtained when the radial depth of cut is varied, of the maximum value of the cutting area in one rotation of the tool with respect to the axial depth of cut becomes minimum. In another specific example, the selection process is a process of selecting, from among a plurality of tools, a tool in which the local minimum value, obtained when the axial depth of cut is varied, of the maximum value of the cutting area in one rotation of the tool with respect to the radial depth of cut becomes minimum.

In still another example, the selection process is a process of selecting, from among a plurality of tools, a tool in which the local minimum value, obtained when the radial depth of cut is varied, of the variation width of the cutting area in one rotation of the tool with respect to the axial depth of cut becomes minimum. In still another example, the selection process is a process of selecting, from among a plurality of tools, a tool in which the local minimum value, obtained when the axial depth of cut is varied, of the variation width of the cutting area in one rotation of the tool with respect to the radial depth of cut becomes minimum.

When considering a tool to be used in specific cutting machining, the user operates the terminal device 200 to request the server 100 to select a tool suitable for the cutting machining, from among a plurality of tools serving as candidates. For example, the user inputs, to the terminal device 200, respective pieces of identification information of a plurality of tools (hereinafter, also referred to as "candidate tools") to serve as candidates. The terminal device 200 transmits, to the server 100, a tool selection request including the inputted identification information of the plurality of candidate tools.

The acceptance unit 111 accepts the tool selection request from the terminal device 200. Using the pieces of identification information included in the tool selection request accepted by the acceptance unit 111, the acquisition unit 112 acquires respective pieces of shape information of the plurality of candidate tools. In a specific example, using the pieces of identification information, the acquisition unit 112 queries the tool DB 120 for the respective pieces of shape information of the candidate tools. The tool DB 120 outputs a plurality of pieces of shape information corresponding to the respective pieces of identification information. The acquisition unit 112 acquires the plurality of pieces of shape information outputted from the tool DB 120.

Based on the plurality of pieces of shape information acquired by the acquisition unit 112, the simulation unit 113 executes simulation of milling for each candidate tool. Since the simulation of the milling is the same as the process described above, description thereof is omitted.

The selection unit 116 executes the above-described selection process, using the result of the simulation of milling performed by the simulation unit 113. That is, in an example, for each of a plurality of candidate tools, the selection unit 116 acquires the local minimum value (hereinafter, also referred to as "first local minimum value"), obtained when the radial depth of cut is varied, of the maximum value of the cutting area in one rotation of the tool with respect to the axial depth of cut. In another example, for each of a plurality of candidate tools, the selection unit 116 acquires the local minimum value (hereinafter, also referred to as "second local minimum value"), obtained when the axial depth of cut is varied, of the maximum value of the cutting area in one rotation of the tool with respect to the radial depth of cut. For example, the selection unit 116 selects at least one of a candidate tool in which the acquired first local minimum value is the smallest and a candidate tool in which the acquired second local minimum value is the smallest (hereinafter, the selected candidate tool will also be referred to as "selected tool"). The selection unit 116 may determine a selected tool, based on both the first local minimum value and the second local minimum value. For example, the selection unit 116 can select, as the selected tool, a candidate tool in which the sum of the first local minimum value and the second local minimum value is the smallest.

The selection unit 116 may acquire the first local minimum value and the second local minimum value in ranges (hereinafter, also referred to as "designated range") of the radial depth of cut and the axial depth of cut designated by the user. For example, the user inputs ranges of the radial depth of cut and the axial depth of cut in which the tool is to be used, as the designated range into the terminal device 200. The acceptance unit 111 accepts (receives) the designated range transmitted from the terminal device 200. Using the designated range accepted by the acceptance unit 111, the selection unit 116 acquires the first local minimum value and the second local minimum value, and determines a selected tool, based on the first local minimum value and the second local minimum value. Accordingly, a tool in which the maximum value of the cutting area with respect to the axial depth of cut and the radial depth of cut becomes the local minimum in the designated range in which the user is to use the tool, can be selected.

In another example, for each of a plurality of candidate tools, the selection unit 116 acquires the local minimum value (hereinafter, also referred to as "third local minimum value"), obtained when the radial depth of cut is varied, of the variation width of the cutting area in one rotation of the tool with respect to the axial depth of cut. In still another example, for each of a plurality of candidate tools, the selection unit 116 acquires the local minimum value (hereinafter, also referred to as "fourth local minimum value"), obtained when the axial depth of cut is varied, of the variation width of the cutting area in one rotation of the tool with respect to the radial depth of cut. For example, the selection unit 116 selects at least one of a candidate tool in which the acquired third local minimum value is the smallest and a candidate tool in which the acquired fourth local minimum value is the smallest. The selection unit 116 may determine a selected tool, based on both the third local minimum value and the third local minimum value. For example, the selection unit 116 can select, as the selected tool, a candidate tool in which the sum of the third local minimum value and the fourth local minimum value is the smallest.

The selection unit 116 may acquire the third local minimum value and the fourth local minimum value in the designated range. Using the designated range accepted by the acceptance unit 111, the selection unit 116 acquires the third local minimum value and the fourth local minimum value, and determines a selected tool, based on the third local minimum value and the fourth local minimum value. Accordingly, a tool in which the variation width of the cutting area with respect to the axial depth of cut and the radial depth of cut becomes the local minimum in the designated range in which the user is to use the tool, can be selected.

For example, the selection unit 116 may determine a selected tool, based on all of the first local minimum value, the second local minimum value, the third local minimum value, and the fourth local minimum value. In a specific example, the selection unit 116 may select, as the selected tool, a candidate tool in which the sum of the first local minimum value, the second local minimum value, the third local minimum value, and the fourth local minimum value in the designated range is the smallest.

The provision unit 114 provides the user with information (hereinafter, also referred to as "selected tool information") regarding the selected tool. For example, the information regarding the selected tool includes identification information of the selected tool. The selected tool information may include shape information of the selected tool. In a specific example, the provision unit 114 transmits the selected tool information to the terminal device 200. The terminal device 200 receives the selected tool information and displays the received selected tool information.

### [7. Operation of tool information presentation system]

Next, operation of the tool information presentation system 10 will be described.

The server 100 can execute a first tool information providing process, a second tool information providing process, and a third tool information providing process.

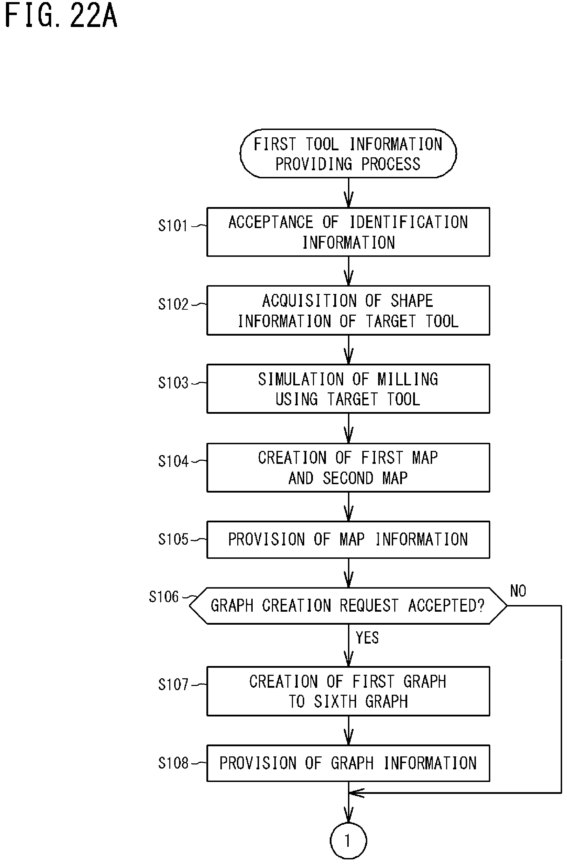

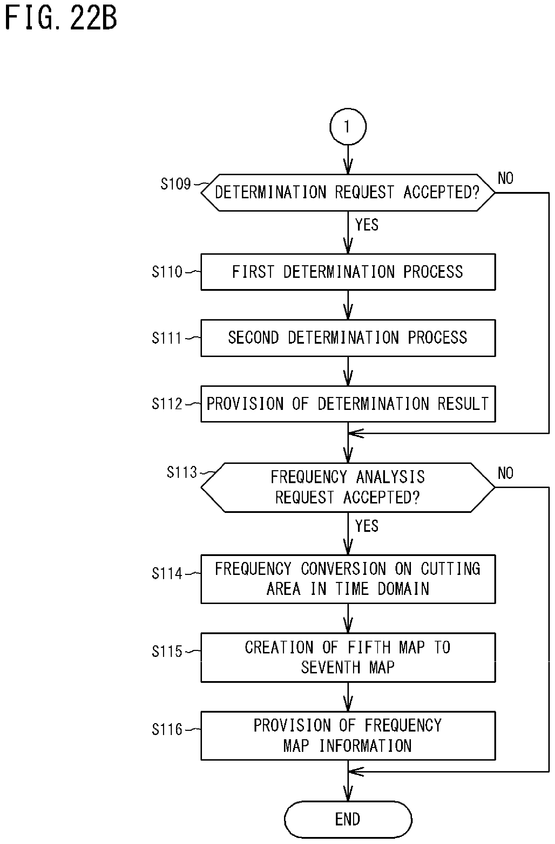

FIG. 22A and FIG. 22B are each a flowchart showing an example of the first tool information providing process performed by the server 100 according to the embodiment.

When the user wishes to study the characteristics of a specific tool (hereinafter, also referred to as "target tool"), the user inputs identification information of the target tool into the terminal device 200. The terminal device 200 transmits, to the server 100, a tool information request including the inputted identification information. The processor 101 of the server 100 receives the tool information request, thereby accepting the identification information of the target tool (step S101).

The processor 101 queries the tool DB 120 for shape information of the target tool, based on the identification information of the target tool. The tool DB 120 outputs shape information corresponding to the identification information, and the processor 101 acquires the shape information of the target tool outputted from the tool DB 120 (step S102).

Using the acquired shape information, the processor 101 executes simulation of milling using the target tool (step S103).

The processor 101 creates a first map and a second map through the simulation of the milling (step S104).

The processor 101 provides the user with map information including the created first map and second map (step S105). Specifically, the processor 101 transmits the above map information to the terminal device 200. The terminal device 200 receives the map information and displays the received map information.

When the user wishes to know the characteristics of the target tool in more detail, the user designates a point on the first map or the second map, and inputs a graph creation request into the terminal device 200. A designated point PT is defined by the axial depth of cut and the radial depth of cut. The terminal device 200 transmits the graph creation request including the inputted designated point, to the server 100.

The processor 101 determines whether or not the graph creation request has been accepted (step S106). When having accepted the graph creation request (YES in step S106), the processor 101 creates a first graph showing the relationship between the axial depth of cut and the maximum value of the cutting area in a case where the radial depth of cut is at the value designated by the designated point PT. The processor 101 creates a second graph showing the relationship between the radial depth of cut and the maximum value of the cutting area in a case where the axial depth of cut is at the value designated by the designated point PT. The processor 101 creates a third graph showing the relationship between the axial depth of cut and the variation width of the cutting area in a case where the radial depth of cut is at the value designated by the designated point PT. The processor 101 creates a fourth graph showing the relationship between the radial depth of cut and the variation width of the cutting area in a case where the axial depth of cut is at the value designated by the designated point PT. The processor 101 creates a fifth graph showing the relationship between the axial depth of cut and the maximum value of the cutting area in a case where the cutting volume of the workpiece in one rotation of the tool is at the value determined by the designated point PT. The processor 101 creates a sixth graph showing the relationship between the axial depth of cut and the variation width of the cutting area in a case where the cutting volume of the workpiece in one rotation of the tool is at the value determined by the designated point PT (step S107). Instead of the fifth graph and the sixth graph, or in addition to the fifth graph and the sixth graph, the processor 101 may create a seventh graph showing the relationship between the radial depth of cut and the maximum value of the cutting area in a case where the cutting volume of the workpiece in one rotation of the tool is at the value determined by the designated point PT. Further, the processor 101 may create an eighth graph showing the relationship between the radial depth of cut and the variation width of the cutting area in a case where the cutting volume of the workpiece in one rotation of the tool is at the value determined by the designated point PT.

The processor 101 provides the user with graph information including the created six graphs from the first graph to the sixth graph (step S108). Specifically, the processor 101 transmits the graph information including the first graph, the second graph, the third graph, the fourth graph, the fifth graph, and the sixth graph, to the terminal device 200. The terminal device 200 receives the graph information and displays the received graph information.

Meanwhile, when the graph creation request has not been accepted (NO in step S106), the processor 101 proceeds to step S109.

When the user wishes to know whether or not the target tool is suitable for milling under a specific machining condition (first setting condition), the user inputs the first setting condition into the terminal device 200. The terminal device 200 transmits, to the server 100, a determination request including the inputted first setting condition.

The processor 101 determines whether or not the determination request has been accepted (step S109). When having accepted the determination request (YES in step S109), the processor 101 executes a first determination process of determining whether or not the maximum value of the cutting area in one rotation of the tool falls within the first allowable range when at least one of the radial depth of cut and the axial depth of cut satisfies the first setting condition (step S110).

Further, the processor 101 executes a second determination process of determining whether or not the variation width of the cutting area in one rotation of the tool falls within the second allowable range when at least one of the radial depth of cut and the axial depth of cut satisfies the first setting condition (step S111).

The processor 101 provides the user with a determination result including the result of the first determination process and the result of the second determination process (step S112). Specifically, the processor 101 transmits a determination result including the result of the first determination process and the result of the second determination process, to the terminal device 200. The terminal device 200 receives the determination result and displays the received determination result.

Meanwhile, when the determination request has not been accepted (NO in step S109), the processor 101 proceeds to step S113.

When the user wishes to know the frequency characteristic of the target tool, the user inputs a frequency analysis request into the terminal device 200. The terminal device 200 transmits the inputted frequency analysis request to the server 100.

The processor 101 determines whether or not the frequency analysis request has been accepted (step S113). When having accepted the frequency analysis request (YES in step S113), the processor 101 performs frequency conversion on the cutting area in the time domain obtained through simulation (step S114).

The processor 101 creates a fifth map showing the distribution of the maximum value at a frequency component higher than 0 Hz in the frequency spectrum of the cutting area with respect to each of the axial depth of cut and the radial depth of cut. The processor 101 further creates a sixth map showing the distribution of the frequency showing the maximum value at a frequency component higher than 0 Hz in the frequency spectrum of the cutting area, with respect to each of the axial depth of cut and the radial depth of cut. The processor 101 further creates a seventh map showing the distribution of the ratio of the frequency showing the maximum value at a frequency component higher than 0 Hz in the frequency spectrum of the cutting area, relative to the cutting frequency of the teeth of the tool, with respect to each of the axial depth of cut and the radial depth of cut (step S115).

The processor 101 provides the user with frequency map information including the created fifth map, sixth map, and seventh map (step S116). Specifically, the processor 101 transmits the frequency map information including the fifth map, the sixth map, and the seventh map, to the terminal device 200. The terminal device 200 receives the frequency map information and displays the received frequency map information.

Then, the first tool information providing process ends. Also, when the frequency analysis request has not been accepted (NO in step S113), the first tool information providing process ends.

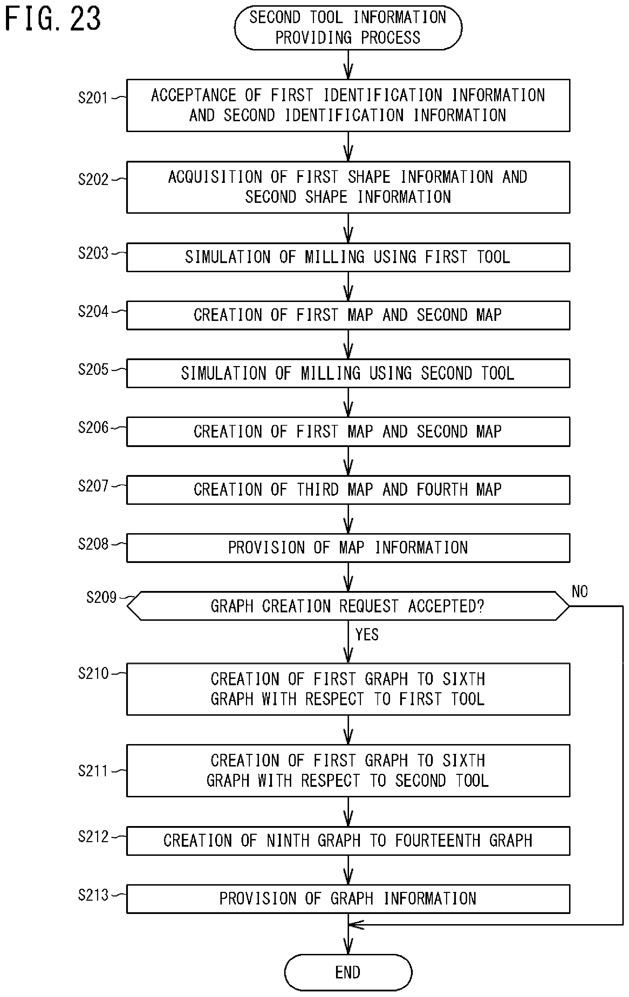

FIG. 23 is a flowchart showing an example of the second tool information providing process performed by the server 100 according to the embodiment.

When the user wishes to compare the characteristics of the specific tool (first tool) with the characteristics of another tool (second tool), the user inputs first identification information of the first tool and second identification information of the second tool, into the terminal device 200. The terminal device 200 transmits, to the server 100, a tool information request including the inputted first identification information and second identification information. The processor 101 of the server 100 receives the tool information request, thereby accepting the first identification information and the second identification information (step S201).

The processor 101 queries the tool DB 120 for first shape information of the first tool, based on the first identification information, and queries the tool DB 120 for second shape information of the second tool, based on the second identification information. The tool DB 120 outputs first shape information corresponding to the first identification information, and outputs second shape information corresponding to the second identification information. The processor 101 acquires the first shape information and the second shape information outputted from the tool DB 120 (step S202).

Using the acquired first shape information, the processor 101 executes simulation of milling using the first tool (step S203).

The processor 101 creates a first map and a second map through the simulation of the milling using the first tool (step S204).

Using the acquired second shape information, the processor 101 executes simulation of milling using the second tool (step S205).

The processor 101 creates a first map and a second map through the simulation of milling using the second tool (step S206).

With respect to each of a plurality of axial depth of cuts and a plurality of radial depth of cuts, the processor 101 calculates the first difference obtained by subtracting the maximum value of the cutting area caused by the second tool from the maximum value of the cutting area caused by the first tool. The processor 101 creates a third map showing the distribution of the first difference between the maximum value of the cutting area caused by the first tool and the maximum value of the cutting area caused by the second tool with respect to the axial depth of cut and the radial depth of cut. With respect to each of a plurality of axial depth of cuts and a plurality of radial depth of cuts, the processor 101 calculates the second difference obtained by subtracting the variation width of the cutting area caused by the second tool from the variation width of the cutting area caused by the first tool. The processor 101 creates a fourth map showing the distribution of the second difference between the maximum value of the cutting area caused by the first tool and the maximum value of the cutting area caused by the second tool with respect to the axial depth of cut and the radial depth of cut (step S207).

The processor 101 provides the user with map information including the first map and the second map with respect to the first tool, the first map and the second map with respect to the second tool, and the created third map and fourth map (step S208). Specifically, the processor 101 transmits, to the terminal device 200, map information including the first map and the second map with respect to the first tool, the first map and the second map with respect to the second tool, and the created third map and fourth map. The terminal device 200 receives the map information and displays the received map information.

When the user wishes to compare the characteristics of the first tool with the characteristics of the second tool in more detail, the user designates a point on any one of the first map and the second map with respect to the first tool, the first map and the second map with respect to the second tool, and the created third map and fourth map, and inputs a graph creation request to the terminal device 200. The terminal device 200 transmits the graph creation request including the inputted designated point, to the server 100.

The processor 101 determines whether or not the graph creation request has been accepted (step S209). When having accepted the graph creation request (YES in step S209), the processor 101 creates, with respect to the first tool, a first graph showing the relationship between the axial depth of cut and the maximum value of the cutting area in a case where the radial depth of cut is at the value designated by the designated point PT. The processor 101 creates a second graph showing the relationship between the radial depth of cut and the maximum value of the cutting area in a case where the axial depth of cut is at the value designated by the designated point PT. The processor 101 creates, with respect to the first tool, a third graph showing the relationship between the axial depth of cut and the variation width of the cutting area in a case where the radial depth of cut is at the value designated by the designated point PT. The processor 101 creates a fourth graph showing the relationship between the radial depth of cut and the variation width of the cutting area in a case where the axial depth of cut is at the value designated by the designated point PT. The processor 101 creates, with respect to the first tool, a fifth graph showing the relationship between the axial depth of cut and the maximum value of the cutting area in a case where the cutting volume of the workpiece in one rotation of the tool is at the value determined by the designated point PT. The processor 101 creates a sixth graph showing the relationship between the axial depth of cut and the variation width of the cutting area in a case where the cutting volume of the workpiece in one rotation of the tool is at the value determined by the designated point PT (step S210). Instead of the fifth graph and the sixth graph with respect to the first tool, or in addition to the fifth graph and the sixth graph with respect to the first tool, the processor 101 may create, with respect to the first tool, a seventh graph showing the relationship between the radial depth of cut and the maximum value of the cutting area in a case where the cutting volume of the workpiece in one rotation of the tool is at the value determined by the designated point PT. Further, the processor 101 may create an eighth graph showing the relationship between the radial depth of cut and the variation width of the cutting area in a case where the cutting volume of the workpiece in one rotation of the tool is at the value determined by the designated point PT.

Further, the processor 101 creates, with respect to the second tool, a first graph showing the relationship between the axial depth of cut and the maximum value of the cutting area in a case where the radial depth of cut is at the value designated by the designated point PT. The processor 101 creates a second graph showing the relationship between the radial depth of cut and the maximum value of the cutting area in a case where the axial depth of cut is at the value designated by the designated point PT. The processor 101 creates, with respect to the second tool, a third graph showing the relationship between the axial depth of cut and the variation width of the cutting area in a case where the radial depth of cut is at the value designated by the designated point PT. The processor 101 creates a fourth graph showing the relationship between the radial depth of cut and the variation width of the cutting area in a case where the axial depth of cut is at the value designated by the designated point PT. The processor 101 creates, with respect to the second tool, a fifth graph showing the relationship between the axial depth of cut and the maximum value of the cutting area in a case where the cutting volume of the workpiece in one rotation of the tool is at the value determined by the designated point PT. The processor 101 creates a sixth graph showing the relationship between the axial depth of cut and the variation width of the cutting area in a case where the cutting volume of the workpiece in one rotation of the tool is at the value determined by the designated point PT (step S210). Instead of the fifth graph and the sixth graph with respect to the second tool, or in addition to the fifth graph and the sixth graph with respect to the second tool, the processor 101 may create, with respect to the second tool, a seventh graph showing the relationship between the radial depth of cut and the maximum value of the cutting area in a case where the cutting volume of the workpiece in one rotation of the tool is at the value determined by the designated point PT. Further, the processor 101 may create an eighth graph showing the relationship between the radial depth of cut and the variation width of the cutting area in a case where the cutting volume of the workpiece in one rotation of the tool is at the value determined by the designated point PT.

The processor 101 creates a ninth graph showing the relationship between the axial depth of cut and the first difference obtained by subtracting the maximum value of the cutting area caused by the second tool from the maximum value of the cutting area caused by the first tool in a case where the radial depth of cut is at the value designated by the designated point PT. Further, the processor 101 creates a tenth graph showing the relationship between the axial depth of cut and the second difference obtained by subtracting the variation width of the cutting area caused by second tool from the variation width of the cutting area caused by the first tool in a case where the radial depth of cut is at the value designated by the designated point PT. The processor 101 creates an eleventh graph showing the relationship between the radial depth of cut and the first difference obtained by subtracting the maximum value of the cutting area caused by the second tool from the maximum value of the cutting area caused by the first tool in a case where the axial depth of cut is at the value designated by the designated point PT. Further, the processor 101 creates a twelfth graph showing the relationship between the radial depth of cut and the second difference obtained by subtracting the variation width of the cutting area caused by the second tool from the variation width of the cutting area caused by the first tool in a case where the axial depth of cut is at the value designated by the designated point PT. The processor 101 further creates a thirteenth graph showing the relationship between the axial depth of cut and the first difference obtained by subtracting the maximum value of the cutting area caused by the second tool from the maximum value of the cutting area caused by the first tool in a case where the cutting volume of the workpiece in one rotation of the tool is at the value determined by the designated point PT. Further, the processor 101 creates a fourteenth graph showing the relationship between the axial depth of cut and the second difference obtained by subtracting the variation width of the cutting area caused by the second tool from the variation width of the cutting area caused by the first tool in a case where the cutting volume of the workpiece in one rotation of the tool is at the value determined by the designated point PT (step S212). Instead of the thirteenth graph and the fourteenth graph, or in addition to the thirteenth graph and the fourteenth graph, the processor 101 may create a fifteenth graph showing the relationship between the radial depth of cut and the first difference obtained by subtracting the maximum value of the cutting area caused by the second tool from the maximum value of the cutting area caused by the first tool in a case where the cutting volume of the workpiece in one rotation of the tool is at the value determined by the designated point PT, and may create a sixteenth graph showing the relationship between the radial depth of cut and the second difference obtained by subtracting the variation width of the cutting area caused by the second tool from the variation width of the cutting area caused by the first tool in a case where the cutting volume of the workpiece in one rotation of the tool is at the value determined by the designated point PT.

The processor 101 provides the user with graph information including the six graphs from the first graph to the sixth graph with respect to the first tool, the six graphs from the first graph to the sixth graph with respect to the second tool, and the six graphs from the ninth graph to the fourteenth graph (step S213). Specifically, the processor 101 transmits the above graph information to the terminal device 200. The terminal device 200 receives the graph information and displays the received graph information. Then, the second tool information providing process ends. Also, when the graph creation request has not been accepted (NO in step S209), the second tool information providing process ends.

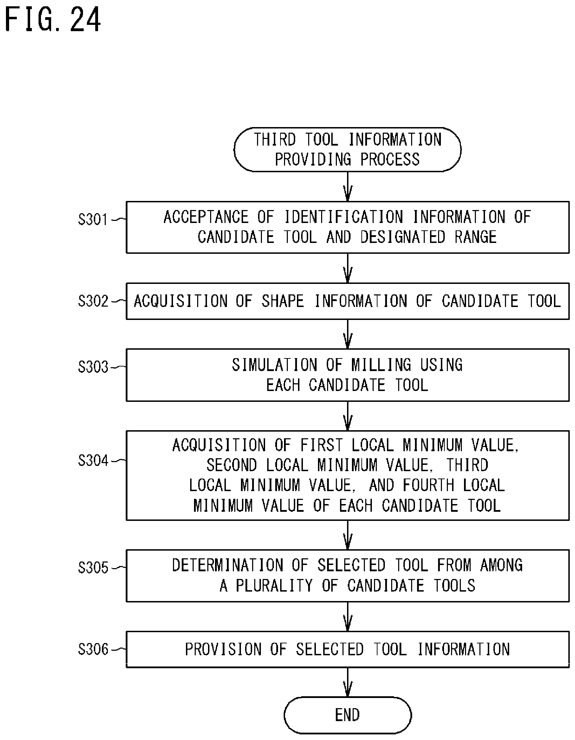

FIG. 24 is a flowchart showing an example of the third tool information providing process performed by the server 100 according to the embodiment.

When the user wishes to select a tool suitable for a specific machining condition (designated range of the radial depth of cut and the axial depth of cut) from among a plurality of candidate tools, the user inputs identification information of each of the plurality of candidate tools into the terminal device 200, and inputs a designated range of the radial depth of cut and the axial depth of cut. The terminal device 200 transmits, to the server 100, a tool selection request including the inputted identification information and designated range. The processor 101 of the server 100 receives the tool selection request, thereby accepting the identification information of each candidate tool and the designated range (step S301).

The processor 101 queries the tool DB 120 for shape information of the candidate tool, based on the identification information of each candidate tool. The tool DB 120 outputs shape information corresponding to the identification information, and the processor 101 acquires the shape information of the candidate tool outputted from the tool DB 120 (step S302).

Using the acquired shape information, the processor 101 executes simulation of milling using each candidate tool (step S303).

The processor 101 acquires, for each candidate tool through simulation of milling: the first local minimum value, obtained when the radial depth of cut is varied, of the maximum value of the cutting area in one rotation of the tool with respect to the axial depth of cut; the second local minimum value, obtained when the axial depth of cut is varied, of the maximum value of the cutting area in one rotation of the tool with respect to the radial depth of cut; the third local minimum value, obtained when the radial depth of cut is varied, of the variation width of the cutting area in one rotation of the tool with respect to the axial depth of cut; and the fourth local minimum value, obtained when the axial depth of cut is varied, of the variation width of the cutting area in one rotation of the tool with respect to the radial depth of cut (step S304).

The processor 101 determines one or a plurality of selected tools from among a plurality of candidate tools, based on the acquired first local minimum value, second local minimum value, third local minimum value, and fourth local minimum value (step S305).

The processor 101 transmits selected tool information regarding the selected tool, to the terminal device 200. The terminal device 200 receives the selected tool information and displays the received selected tool information. Then, the third tool information providing process ends.

### [8. Modification]

In the above-described embodiment, the server 100 transmits interference state information to the terminal device 200, and the terminal device 200 displays the interference state information, whereby the interference state information is presented to the user. However, the present disclosure is not limited thereto. For example, a stand-alone tool information presentation device may be implemented by a computer including a display unit, and the tool information presentation device may execute simulation of milling using a tool to create interference state information such as the first map and the second map and display the created interference state information.

In the above-described embodiment, the server 100 executes simulation of milling using a tool, and, based on the simulation result, creates interference state information indicating characteristics of the tool such as the first map and the second map. However, the present disclosure is not limited thereto. For example, actual values (or simulation values) of the cutting area with respect to the axial depth of cut and the radial depth of cut caused by various tools may be stored in a database, and the server 100 may acquire actual values of the cutting area caused by the target tool from the database and create interference state information such as the first map and the second map using the acquired actual values.

In the above-described embodiment, the cutting area is used as a physical quantity indicating the interference state between the tool and the workpiece, but the present disclosure is not limited thereto. As a physical quantity indicating the interference state between the tool and the workpiece, cutting resistance may be used. However, when calculating the cutting resistance, it is difficult to calculate an accurate value unless the tool's rake angle, relief angle, and cutting edge roundness, the material of the workpiece, and the like are used. Since the cutting resistance is related to elements such as the tool's rake angle, relief angle, and cutting edge roundness, the material of the workpiece, and the like, if the cutting resistance is used, whether or not the tool is suitable for milling can be accurately evaluated. However, since temporal variation (and frequency variation) in the cutting area with respect to the axial depth of cut and the radial depth of cut is generally equivalent to temporal variation (and frequency variation) in the cutting resistance with respect to the axial depth of cut and the radial depth of cut, whether or not the tool is suitable for milling can be appropriately evaluated by the cutting area as well.

### [9. Additional notes]

### (Additional note 1)

A computer program for presenting information regarding a tool for milling to a user, the computer program causing a computer to execute the steps of:
determining, when, regarding a specific tool, at least one of a radial depth of cut and an axial depth of cut of the tool satisfies a first setting condition, whether or not a maximum value in one rotation of the tool of a physical quantity indicating an interference state in one rotation of the tool between the tool and a workpiece with respect to the radial depth of cut and the axial depth of cut falls within a first allowable range; and
transmitting a first determination result as to whether or not the maximum value of the physical quantity falls within the first allowable range.

### (Additional note 2)

A computer program for presenting information regarding a tool for milling to a user, the computer program causing a computer to execute the steps of:
determining, when, regarding a specific tool, at least one of a radial depth of cut and an axial depth of cut of the tool satisfies a first setting condition, whether or not a variation width in one rotation of the tool of a physical quantity indicating an interference state in one rotation of the tool between the tool and a workpiece with respect to the radial depth of cut and the axial depth of cut falls within a second allowable range; and
transmitting a second determination result as to whether or not the variation width of the physical quantity falls within the second allowable range.

### (Additional note 3)

A computer program for presenting information regarding a tool for milling to a user, the computer program causing a computer to execute the steps of:
executing a selection process of selecting one or a plurality of tools from among a plurality of tools, based on a physical quantity indicating an interference state in one rotation of the tool between the tool and a workpiece with respect to a radial depth of cut and an axial depth of cut of the tool; and
transmitting information regarding the one or the plurality of tools selected in the selection process.

### [10. Supplementary note]

The embodiment disclosed herein is merely illustrative and not restrictive in all aspects. The scope of the present disclosure is defined by the scope of the claims rather than the embodiment described above, and is intended to include meaning equivalent to the scope of the claims and all modifications within the scope.

### REFERENCE SIGNS LIST

10 tool information presentation system
100 server (tool information presentation device)
101 processor
102 nonvolatile memory
103 volatile memory
104 communication interface (communication I/F)
105 data bus
110 tool information presentation program
111 acceptance unit
112 acquisition unit
113 simulation unit
114 provision unit
115 determination unit
116 selection unit
120 tool database (tool DB)
200 terminal device (display device)
201 input unit
202 display unit
300 network
400 end mill (tool)
401 tooth
401A, 401B, 401C, 401D tooth
450 virtual model
451 cutting tooth element
501, 521A, 521B first graph
502, 522A, 522B second graph
503, 523A, 523B third graph
504, 524A, 524B fourth graph
505, 525A, 525B fifth graph
506, 526A, 526B sixth graph
507 seventh graph
508 eighth graph
511A, 511B first map
512A, 512B second map
511C third map
512C fourth map
521C ninth graph
522C tenth graph
523C eleventh graph
524C twelfth graph
527C thirteenth graph
528C fourteenth graph
502A, 502B, 504A, 506A, 506B, 508A, 508B, 522AA, 522AB, 522BA, 522BB, 522CA, 524AA, 524BA, 524CA, 528AA, 528AB, 528BA, 528BB, 528CA graphic
AM maximum peak of cutting area
F_AM frequency showing maximum peak of cutting area

## Claims

1. A tool information presentation system configured to present information regarding a tool for milling to a user, the tool information presentation system comprising:
a tool information presentation device; and
a display device, wherein
the tool information presentation device transmits, to the display device, interference state information, regarding a specific tool, indicating an interference state in one rotation of the tool between the tool and a workpiece with respect to a radial depth of cut and an axial depth of cut of the tool, and
the display device receives the interference state information transmitted from the tool information presentation device and displays the received interference state information.

2. The tool information presentation system according to claim 1, wherein
the interference state information includes a first map showing a distribution of a maximum value of a physical quantity indicating the interference state with respect to each of the radial depth of cut and the axial depth of cut.

3. The tool information presentation system according to claim 1 or 2, wherein
the interference state information includes a second map showing a distribution of a variation width of a physical quantity indicating the interference state with respect to each of the radial depth of cut and the axial depth of cut.

4. The tool information presentation system according to any one of claims 1 to 3, wherein
the interference state information includes a first graph showing a relationship between the axial depth of cut and a maximum value of a physical quantity indicating the interference state.

5. The tool information presentation system according to any one of claims 1 to 4, wherein
the interference state information includes a second graph showing a relationship between the axial depth of cut and a difference obtained by subtracting a variation width of a physical quantity indicating the interference state from a maximum value of the physical quantity.

6. The tool information presentation system according to claim 5, wherein
the interference state information includes a figure in which the first graph and the second graph are superimposed on an identical coordinate system having the axial depth of cut as a first coordinate axis and the physical quantity as a second coordinate axis.

7. The tool information presentation system according to any one of claims 1 to 6, wherein
the interference state information includes a third graph showing a relationship between the radial depth of cut and a maximum value of a physical quantity indicating the interference state.

8. The tool information presentation system according to any one of claims 1 to 7, wherein
the interference state information includes a fourth graph showing a relationship between the radial depth of cut and a difference obtained by subtracting a variation width of a physical quantity indicating the interference state from a maximum value of the physical quantity.

9. The tool information presentation system according to claim 8, wherein
the interference state information includes a figure in which the third graph and the fourth graph are superimposed on an identical coordinate system having the radial depth of cut as a first coordinate axis and the physical quantity as a second coordinate axis.

10. The tool information presentation system according to claim 1, wherein
the tool information presentation device transmits, to the display device, first interference state information including a first map showing a distribution of a maximum value of a physical quantity indicating the interference state with respect to each of the radial depth of cut and the axial depth of cut, and a second map showing a distribution of a variation width of the physical quantity with respect to each of the radial depth of cut and the axial depth of cut,
the display device receives the first interference state information and displays an interference state screen including the first map and the second map included in the received first interference state information,
the display device accepts an input from the user of a first designated value for the radial depth of cut and transmits the inputted first designated value to the tool information presentation device,
the tool information presentation device receives the first designated value, and transmits, to the display device, second interference state information including a first graph showing a relationship between the axial depth of cut and a maximum value of the physical quantity in a case where the radial depth of cut is at the first designated value, and
the display device receives the second interference state information and displays, on the interference state screen, the first graph included in the received second interference state information.

11. The tool information presentation system according to claim 10, wherein
the second interference state information includes a second graph showing a relationship between the axial depth of cut and a difference obtained by subtracting the variation width of the physical quantity from the maximum value of the physical quantity in a case where the radial depth of cut is at the first designated value, and
the display device displays, on the interference state screen, the second graph included in the received second interference state information.

12. The tool information presentation system according to claim 11, wherein
the interference state screen includes a figure in which the first graph and the second graph are superimposed on an identical coordinate system having the axial depth of cut as a first coordinate axis and the physical quantity as a second coordinate axis.

13. The tool information presentation system according to any one of claims 10 to 12, wherein
the display device accepts an input from the user of a second designated value for the axial depth of cut, and transmits the inputted second designated value to the tool information presentation device,
the tool information presentation device receives the second designated value, and transmits, to the display device, third interference state information including a third graph showing a relationship between the radial depth of cut and the maximum value of the physical quantity in a case where the axial depth of cut is at the second designated value, and
the display device receives the third interference state information and displays, on the interference state screen, the third graph included in the received third interference state information.

14. The tool information presentation system according to claim 13, wherein
the third interference state information includes a fourth graph showing a relationship between the radial depth of cut and a difference obtained by subtracting the variation width of the physical quantity from the maximum value of the physical quantity in a case where the axial depth of cut is at the second designated value, and
the display device displays, on the interference state screen, the fourth graph included in the received third interference state information.

15. The tool information presentation system according to claim 14, wherein
the interference state screen includes a figure in which the third graph and the fourth graph are superimposed on an identical coordinate system having the radial depth of cut as a first coordinate axis and the physical quantity as a second coordinate axis.

16. The tool information presentation system according to claim 1, wherein
the tool information presentation device transmits, to the display device, first interference state information including a first map showing a distribution of a maximum value of a physical quantity indicating the interference state with respect to each of the radial depth of cut and the axial depth of cut, and a second map showing a distribution of a variation width of the physical quantity with respect to each of the radial depth of cut and the axial depth of cut,
the display device receives the first interference state information and displays an interference state screen including the first map and the second map included in the received first interference state information,
the display device accepts an input from the user of each of a first designated value for the radial depth of cut and a second designated value for the axial depth of cut, and transmits the inputted first designated value and second designated value to the tool information presentation device,
the tool information presentation device receives the first designated value and the second designated value, and transmits, to the display device, fourth interference state information including a fifth graph showing a relationship between the axial depth of cut and the maximum value of the physical quantity in a case where a cutting volume of the workpiece in one rotation of the tool is at a fixed value determined by a product of the first designated value and the second designated value, and
the display device receives the fourth interference state information and displays, on the interference state screen, the fifth graph included in the received fourth interference state information.

17. The tool information presentation system according to claim 16, wherein
the fourth interference state information includes a sixth graph showing a relationship between the axial depth of cut and a difference obtained by subtracting the variation width of the physical quantity from the maximum value of the physical quantity in a case where the cutting volume is at the fixed value, and
the display device displays, on the interference state screen, the sixth graph included in the received fourth interference state information.

18. The tool information presentation system according to claim 1, wherein
the tool information presentation device transmits, to the display device, first interference state information including a first map showing a distribution of a maximum value of a physical quantity indicating the interference state with respect to each of the radial depth of cut and the axial depth of cut, and a second map showing a distribution of a variation width of the physical quantity with respect to each of the radial depth of cut and the axial depth of cut,
the display device receives the first interference state information and displays an interference state screen including the first map and the second map included in the received first interference state information,
the display device accepts an input from the user of each of a first designated value for the radial depth of cut and a second designated value for the axial depth of cut, and transmits the inputted first designated value and second designated value to the tool information presentation device,
the tool information presentation device receives the first designated value and the second designated value, and transmits, to the display device, fifth interference state information including a seventh graph showing a relationship between the radial depth of cut and the maximum value of the physical quantity in a case where a cutting volume of the workpiece in one rotation of the tool is at a fixed value determined by a product of the first designated value and the second designated value, and
the display device receives the fifth interference state information and displays, on the interference state screen, the seventh graph included in the received fifth interference state information.

19. The tool information presentation system according to claim 18, wherein
the fifth interference state information includes an eighth graph showing a relationship between the radial depth of cut and a difference obtained by subtracting the variation width of the physical quantity from the maximum value of the physical quantity in a case where the cutting volume is at the fixed value, and
the display device displays, on the interference state screen, the eighth graph included in the received fifth interference state information.

20. The tool information presentation system according to any one of claims 1 to 19, wherein
the interference state information includes a third map showing a distribution of a difference obtained by subtracting a maximum value of a second physical quantity indicating an interference state between a second tool and the workpiece from a maximum value of a first physical quantity indicating an interference state between a first tool and the workpiece with respect to each of the radial depth of cut and the axial depth of cut.

21. The tool information presentation system according to any one of claims 1 to 20, wherein
the interference state information includes a fourth map showing a distribution of a difference obtained by subtracting a variation width of a second physical quantity indicating an interference state between a second tool and the workpiece from a variation width of a first physical quantity indicating an interference state between a first tool and the workpiece with respect to each of the radial depth of cut and the axial depth of cut.

22. The tool information presentation system according to any one of claims 1 to 21, wherein
the interference state information includes a ninth graph showing a relationship between the axial depth of cut and a difference obtained by subtracting a maximum value of a second physical quantity indicating an interference state between a second tool and the workpiece from a maximum value of a first physical quantity indicating an interference state between a first tool and the workpiece.

23. The tool information presentation system according to any one of claims 1 to 22, wherein
the interference state information includes a tenth graph showing a relationship between the axial depth of cut and a difference obtained by subtracting a variation width of a second physical quantity indicating an interference state between a second tool and the workpiece from a variation width of a first physical quantity indicating an interference state between a first tool and the workpiece.

24. The tool information presentation system according to any one of claims 1 to 23, wherein
the interference state information includes an eleventh graph showing a relationship between the radial depth of cut and a difference obtained by subtracting a maximum value of a second physical quantity indicating an interference state between a second tool and the workpiece from a maximum value of a first physical quantity indicating an interference state between a first tool and the workpiece.

25. The tool information presentation system according to any one of claims 1 to 24, wherein
the interference state information includes a twelfth graph showing a relationship between the radial depth of cut and a difference obtained by subtracting a variation width of a second physical quantity indicating an interference state between a second tool and the workpiece from a variation width of a first physical quantity indicating an interference state between a first tool and the workpiece.

26. The tool information presentation system according to any one of claims 1 to 25, wherein
the interference state information includes a fifth map showing a distribution of a maximum value at a frequency component higher than 0 Hz in a frequency spectrum of a physical quantity indicating the interference state that changes over time in association with rotation of the tool, with respect to each of the radial depth of cut and the axial depth of cut.

27. The tool information presentation system according to any one of claims 1 to 26, wherein
the interference state information includes a sixth map showing a distribution of a frequency showing a maximum value at a frequency component higher than 0 Hz in a frequency spectrum of a physical quantity indicating the interference state that changes over time in association with rotation of the tool, with respect to each of the radial depth of cut and the axial depth of cut.

28. The tool information presentation system according to any one of claims 1 to 27, wherein
the interference state information includes a seventh map showing a distribution of a ratio of a frequency showing a maximum value at a frequency component higher than 0 Hz in a frequency spectrum of a physical quantity indicating the interference state that changes over time in association with rotation of the tool, relative to a cutting frequency of teeth of the tool, with respect to each of the radial depth of cut and the axial depth of cut.

29. The tool information presentation system according to any one of claims 1 to 28, wherein
the interference state information includes a maximum value in one rotation of the tool of a physical quantity indicating the interference state,
when at least one of the radial depth of cut and the axial depth of cut satisfies a first setting condition, the tool information presentation device determines whether or not the maximum value in one rotation of the tool of the physical quantity falls within a first allowable range, and
the display device displays a first determination result as to whether or not the maximum value of the physical quantity falls within the first allowable range.

30. The tool information presentation system according to any one of claims 1 to 29, wherein
the interference state information includes a variation width in one rotation of the tool of a physical quantity indicating the interference state,
when at least one of the radial depth of cut and the axial depth of cut satisfies a second setting condition, the tool information presentation device determines whether or not the variation width in one rotation of the tool of the physical quantity falls within a second allowable range, and
the display device displays a second determination result as to whether or not the variation width of the physical quantity falls within the second allowable range.

31. The tool information presentation system according to any one of claims 1 to 30, wherein
the tool information presentation device executes a selection process of selecting one or a plurality of tools from among a plurality of tools, based on the physical quantity, and
the display device displays information regarding the one or the plurality of tools selected in the selection process.

32. The tool information presentation system according to claim 31, wherein
the selection process is a process of selecting, from among the plurality of tools, a tool in which a local minimum value, obtained when the radial depth of cut is varied, of a maximum value in one rotation of the tool of the physical quantity with respect to the axial depth of cut becomes minimum.

33. The tool information presentation system according to claim 31, wherein
the selection process is a process of selecting, from among the plurality of tools, a tool in which a local minimum value, obtained when the axial depth of cut is varied, of a maximum value in one rotation of the tool of the physical quantity with respect to the radial depth of cut becomes minimum.

34. The tool information presentation system according to claim 31, wherein
the selection process is a process of selecting, from among the plurality of tools, a tool in which a local minimum value, obtained when the radial depth of cut is varied, of a variation width in one rotation of the tool of the physical quantity with respect to the axial depth of cut becomes minimum.

35. The tool information presentation system according to claim 31, wherein
the selection process is a process of selecting, from among the plurality of tools, a tool in which a local minimum value, obtained when the axial depth of cut is varied, of a variation width in one rotation of the tool of the physical quantity with respect to the radial depth of cut becomes minimum.

36. A tool information presentation device configured to present information regarding a tool for milling to a user, the tool information presentation device comprising
an output unit configured to output, for presenting to the user, interference state information, regarding a specific tool, indicating an interference state in one rotation of the tool between the tool and a workpiece with respect to a radial depth of cut and an axial depth of cut of the tool.

37. A tool information presentation method for presenting information regarding a tool for milling to a user, the tool information presentation method comprising the steps of:
transmitting to a display device, by a tool information presentation device, interference state information, regarding a specific tool, indicating an interference state in one rotation of the tool between the tool and a workpiece with respect to a radial depth of cut and an axial depth of cut of the tool; and
receiving, by the display device, the interference state information transmitted from the tool information presentation device, and displaying, by the display device, the received interference state information.

38. A tool information presentation method for presenting information regarding a tool for milling to a user, the tool information presentation method comprising the steps of:
receiving, by a display device, interference state information, regarding a specific tool, indicating an interference state in one rotation of the tool between the tool and a workpiece with respect to a radial depth of cut and an axial depth of cut of the tool; and
displaying, by the display device, the received interference state information.
